# EUROPEAN PATENT SPECIFICATION

(11) **EP 4 130 136 B1**
(45) Date of publication and mention of the grant of the patent: **17.04.2024**
(21) Application number: 21792589.0
(22) Date of filing: 17.02.2021
(51) Int. Cl.: C08L 15/00, C08C 19/08, C08C 19/22, C08F 8/34, C08F 36/18, C08K 3/04, C08K 5/39, C08K 5/47, C08L 9/00, C08C 19/20, C08C 19/44, C08F 136/18

(54) **RUBBER COMPOSITION, VULCANIZED MATERIAL, AND MOLDED ARTICLE**
KAUTSCHUKZUSAMMENSETZUNG, VULKANISIERTES MATERIAL UND FORMARTIKEL
COMPOSITION DE CAOUTCHOUC, MATÉRIAU VULCANISÉ ET ARTICLE MOULÉ

(30) Priority: 21.04.2020 JP 2020075211
(43) Date of publication of application: 08.02.2023
(73) Proprietor: Denka Company Limited, Tokyo 103-8338 (JP)
(72) Inventor: KONDO, Atsunori, Tokyo 103-8338 (JP); SUNADA, Takashi, Tokyo 103-8338 (JP)
(74) Representative: Hoffmann Eitle
(86) International application number: PCT/JP2021/005909
(87) International publication number: WO 2021/215095

(56) References cited:
- WO-A1-2014/119517
- WO-A1-2019/102898
- WO-A1-2019/102898
- WO-A1-2020/189515
- WO-A1-2020/189518
- WO-A1-2020/230746
- JP-A- H 093 120
- JP-A- H 093 120
- JP-A- H08 188 676
- JP-A- S59 115 346
- JP-A- 2013 216 029
- JP-A- 2021 021 024
- JP-A- 2021 031 517

## Description

### Technical Field

The present invention relates to a rubber composition, a vulcanizate, a molded article.

### Background Art

Chloroprene rubbers are excellent in properties such as mechanical properties, ozone resistance, and chemical resistance and have been used in a wide variety of fields such as automotive parts, adhesives, and various industrial rubber parts by utilizing their characteristics. Furthermore, in recent years, the performance required for industrial rubber parts is remarkably increasing, and improvement of the tensile strength, the compression set resistance, and the abrasion resistance of a vulcanizate, which is obtained using a chloroprene rubber, is demanded in addition to improvement of properties such as mechanical properties, ozone resistance, and chemical resistance mentioned above.

As a technique of improving the tensile strength, as described in Patent Literature 1 below, known is a rubber composition containing 5 parts by weight or more of a saturated aliphatic carboxylic acid having a molecular weight of 300 or more with respect to 100 parts by weight of a rubber component.

As a technique of improving the compression set resistance, as described in Patent Literature 2 below, known is a chloroprene rubber composition containing 100 parts by mass in total of a chloroprene rubber and natural rubber, 0.1 to 10 parts by mass of a block copolymer of styrene and butadiene, 0.1 to 3 parts by mass of ethylene thiourea, and 0.1 to 3 parts by mass of dipentamethylenethiuram tetrasulfide.

As a technique of improving the abrasion resistance, as described in Patent Literature 3 below, known is a modified conjugated diene-based polymer obtained by mixing a high-molecular weight component having predetermined properties and a low-molecular weight component having predetermined properties.

### Citation List

### Patent Literature

Patent Literature 1: Japanese Unexamined Patent Publication No. 2013-249409
Patent Literature 2: Japanese Unexamined Patent Publication No. 2012-111899
Patent Literature 3: Japanese Unexamined Patent Publication No. 2010-121086
Patent Literature 4: Japanese Unexamined Patent Publication No. 2016-141736

Patents WO2019/102898 A1 and JPH093120 A disclose the modification of a chloroprene rubber at its terminal ends, by both a benzothiazole derivative and a xanthogen derivative.

### Summary of Invention

### Technical Problem

As the chloroprene rubber, a sulfur-modified chloroprene rubber can be used. It may be required for a rubber composition containing a sulfur-modified chloroprene rubber to obtain a vulcanizate that can achieve excellent tensile strength, compression set resistance, and abrasion resistance, in some cases.

In this regard, an aspect of the present invention is intended to provide a rubber composition with which a vulcanizate having excellent tensile strength, compression set resistance, and abrasion resistance can be obtained. Another aspect of the present invention is intended to provide a vulcanizate of the above-described rubber composition. Another aspect of the present invention is intended to provide a molded article composed of the above-described vulcanizate (a molded article using the vulcanizate).

### Solution to Problem

The inventors of the present application have conducted intensive studies in order to solve such problems, and as a result, they have succeeded in obtaining a vulcanizate having excellent tensile strength, compression set resistance, and abrasion resistance, by introducing a specific structure in a molecular terminal of a sulfur-modified chloroprene rubber, using a specific amount of carbon black having an average particle diameter in a specific range, and using a specific amount of a diene-based polymer other than a chloroprene rubber, thereby completing the present invention.

An aspect of the present invention relates to a rubber composition containing: 100 parts by mass of a sulfur-modified chloroprene rubber; 25 to 55 parts by mass of carbon black having an average particle diameter of 70 nm or less; and more than 0 parts by mass and 15 parts by mass or less of a diene-based rubber other than a chloroprene rubber, in which the sulfur-modified chloroprene rubber has a functional group A represented by General Formula (A) below and positioned at a molecular terminal, and in the sulfur-modified chloroprene rubber, a mass ratio B/A of a content of a functional group B represented by General Formula (B) below and positioned at a molecular terminal with respect to a content of the functional group A is 12.00 or less, and a total amount of the functional group A and the functional group B is 0.10 to 1.00% by mass. 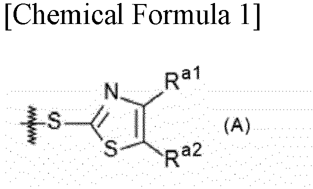 (In the formula, R^{a1} and R^{a2} each independently represent a hydrogen atom, a halogen atom, a hydroxy group, an alkoxy group, a carboxy group, a carboxylate group, a cyano group, an alkyl group which may have a substituent, or an arylthio group which may have a substituent, and R^{a1} and R^{a2} may bond with each other to form a ring which may have a substituent.) 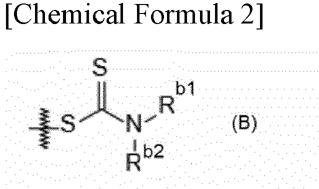 (In the formula, R^{b1} and R^{b2} each independently represent an alkyl group which may have a substituent or an aryl group which may have a substituent.)

According to the rubber composition of the aspect of the present invention, a vulcanizate having excellent tensile strength, compression set resistance, and abrasion resistance can be obtained.

Another aspect of the present invention relates to a vulcanizate of the aforementioned rubber composition. Another aspect of the present invention relates to a molded article composed of the aforementioned vulcanizate.

### Advantageous Effects of Invention

According to an aspect of the present invention, it is possible to provide a rubber composition with which a vulcanizate having excellent tensile strength, compression set resistance, and abrasion resistance can be obtained. According to another aspect of the present invention, it is possible to provide a vulcanizate of the above-described rubber composition. According to another aspect of the present invention, it is possible to provide a molded article composed of the above-described vulcanizate (a molded article using the vulcanizate).

### Description of Embodiments

Hereinafter, embodiments for carrying out the present invention will be described. Embodiments described below are only typical exemplary embodiments of the present invention.

In the present specification, a numerical range that has been indicated by use of "to" indicates the range that includes the numerical values which are described before and after "to", as the minimum value and the maximum value, respectively. "A or more" of the numerical range means A and a range of more than A. "A or less" of the numerical range means A and a range of less than A. In the numerical ranges that are described stepwise in the present specification, the upper limit value or the lower limit value of the numerical range of a certain stage can be arbitrarily combined with the upper limit value or the lower limit value of the numerical range of another stage. In the numerical ranges that are described in the present specification, the upper limit value or the lower limit value of the numerical value range may be replaced with the value shown in Examples. "A or B" may include any one of A and B, and may also include both of A and B. Materials listed as examples in the present specification may be used singly or in combinations of two or more kinds thereof, unless otherwise specified. In a case where a plurality of substances corresponding to each component exist in the composition, the content of each component in the composition means the total amount of the plurality of substances that exist in the composition, unless otherwise specified. An "alkyl group" may be linear, branched or cyclic, unless otherwise specified.

### <Rubber composition>

A rubber composition (sulfur-modified chloroprene rubber composition) of the present embodiment contains: 100 parts by mass of a sulfur-modified chloroprene rubber; 25 to 55 parts by mass of carbon black having an average particle diameter of 70 nm or less; and more than 0 parts by mass and 15 parts by mass or less of a diene-based rubber (hereinafter, referred to as "diene-based rubber A") other than a chloroprene rubber, in which the sulfur-modified chloroprene rubber has a functional group A (hereinafter, referred to as "terminal functional group A") represented by General Formula (A) below and positioned at a molecular terminal, and in the sulfur-modified chloroprene rubber, a mass ratio B/A of a content of a functional group B (hereinafter, referred to as "terminal functional group B") represented by General Formula (B) below and positioned at a molecular terminal with respect to a content of the functional group A is 12.00 or less, and a total amount of the functional group A and the functional group B is 0.10 to 1.00% by mass. That is, the sulfur-modified chloroprene rubber has at least one of a structure represented by General Formula (A) below and a structure represented by General Formula (B) below at a molecular terminal, the mass ratio B/A of the terminal functional group A represented by General Formula (A) below and the terminal functional group B represented by General Formula (B) below is 0 to 12.00, and the total amount (A + B) of the terminal functional group A and the terminal functional group B in 100 parts by mass of the sulfur-modified chloroprene rubber is 0.10 to 1.00 parts by mass. 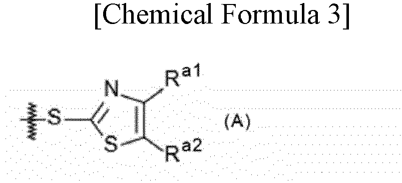 (In the formula, R^{a1} and R^{a2} each independently represent a hydrogen atom, a halogen atom, a hydroxy group, an alkoxy group, a carboxy group, a carboxylate group, a cyano group, an alkyl group which may have a substituent, or an arylthio group which may have a substituent, R^{a1} and R^{a2} may be identical to or different from each other, and R^{a1} and R^{a2} may bond with each other to form a ring which may have a substituent. R^{a1} and R^{a2} can bond with each other to form a ring which has a substituent or a ring which does not have a substituent.) 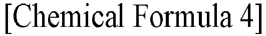 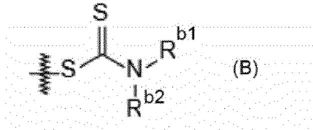 (In the formula, R^{b1} and R^{b2} each independently represent an alkyl group which may have a substituent or an aryl group which may have a substituent, and R^{b1} and R^{b2} may be identical to or different from each other.)

A vulcanizate can be obtained by vulcanizing the rubber composition of the present embodiment. According to the rubber composition of the present embodiment, a vulcanizate having excellent tensile strength, compression set resistance, and abrasion resistance can be obtained as a vulcanizate obtained by vulcanizing the rubber composition.

Incidentally, it may be required for the rubber composition containing a sulfur-modified chloroprene rubber to obtain a vulcanizate that can achieve excellent tensile strength, compression set resistance, abrasion resistance, and scorch resistance, in some cases. As a technique of improving the scorch resistance of the rubber, as described in Patent Literature 4 mentioned above, known is a rubber composition containing 1 to 10 parts by weight of an amine salt of a dithiocarbamic acid with respect to 100 parts by weight of a chloroprene rubber.

The inventors of the present application have conducted intensive studies, and as a result, they have succeeded in obtaining a vulcanizate having excellent tensile strength, compression set resistance, abrasion resistance, and scorch resistance, by introducing a specific structure in a molecular terminal of a sulfur-modified chloroprene rubber, using a specific amount of carbon black having an average particle diameter in a specific range, and using a specific amount of a diene-based polymer other than a chloroprene rubber. That is, according to the rubber composition of the present embodiment, it is possible to obtain a vulcanizate having excellent tensile strength, compression set resistance, abrasion resistance, and scorch resistance (it is possible to obtain a vulcanizate that is excellent in scorch resistance and tensile strength and can improve compression set resistance and abrasion resistance).

A method for producing a rubber composition of the present embodiment includes a step of obtaining a sulfur-modified chloroprene rubber by a method for producing a sulfur-modified chloroprene rubber described below and a step of mixing the sulfur-modified chloroprene rubber, the carbon black, and the diene-based rubber A.

### (Sulfur-modified chloroprene rubber)

The sulfur-modified chloroprene rubber is a polymer having a structural unit derived from chloroprene (2-chloro-1,3-butadiene). The sulfur-modified chloroprene rubber has chloroprene as a monomer unit. The sulfur-modified chloroprene rubber includes a sulfur atom in a molecule chain, and may include a sulfur atom in a main chain. The sulfur-modified chloroprene rubber may include a polysulfide bond (S₂ to S₈) in a molecule chain, and may include a polysulfide bond (S₂ to S₈) in a main chain.

The sulfur-modified chloroprene rubber may have a structural unit derived from a monomer copolymerizable with chloroprene. Examples of the monomer copolymerizable with chloroprene include 2,3-dichloro-1,3-butadiene, 1-chloro-1,3-butadiene, styrene, acrylonitrile, methacrylonitrile, isoprene, butadiene, acrylic acid, methacrylic acid, and esters. The monomer copolymerizable with chloroprene may be used alone or in combination of two or more kinds thereof. The sulfur-modified chloroprene rubber may not have a structural unit derived from at least one of these monomers exemplified as the monomer copolymerizable with chloroprene (for example, 2,3-dichloro-1,3-butadiene).

For example, when 2,3-dichloro-1,3-butadiene among the monomers copolymerizable with chloroprene is used, the crystallization speed of a sulfur-modified chloroprene rubber can be delayed. A sulfur-modified chloroprene rubber with a slow crystallization speed can maintain rubber elasticity even in a low-temperature environment, and for example, low-temperature compression set can be improved.

In the case of using the monomer copolymerizable with chloroprene, the used amount of the monomer copolymerizable with chloroprene (the content of the structural unit derived from the monomer copolymerizable with chloroprene) is preferably 10% by mass or less in all the monomers including chloroprene (the total amount of the structural units constituting the sulfur-modified chloroprene rubber). When this used amount is 10% by mass or less, the heat resistance of the sulfur-modified chloroprene rubber is easily improved and deterioration in processability is easily suppressed. From the same viewpoints, the used amount of chloroprene (the content of the structural unit derived from chloroprene) is preferably 90% by mass or more, 92% by mass or more, 95% by mass or more, more than 95% by mass, or 98% by mass or more in all the monomers including chloroprene (the total amount of the structural units constituting the sulfur-modified chloroprene rubber). An aspect in which the structural unit constituting the sulfur-modified chloroprene rubber is composed of the structural unit derived from chloroprene (substantially 100% by mass of the structural unit constituting the sulfur-modified chloroprene rubber is the structural unit derived from chloroprene) may be employed.

In the sulfur-modified chloroprene rubber, the terminal functional group A may be positioned at the terminal of the main chain and/or the side chain. The terminal functional group A can be obtained, for example, by using a thiazole compound in a plasticization step described below. Examples of the substituent with respect to the alkyl group for R^{a1} or R^{a2} include a halogen atom, a hydroxy group, an alkoxy group, a carboxy group, a carboxylate group, a cyano group, a sulfo group, a sulfonate group, a nitro group, and an amino group. Examples of the substituent with respect to the arylthio group for R^{a1} or R^{a2} include an alkyl group, a halogen atom, a hydroxy group, an alkoxy group, a carboxy group, a carboxylate group, a cyano group, a sulfo group, a sulfonate group, a nitro group, and an amino group.

In the terminal functional group A, R^{a1} and R^{a2} may bond with each other to form a ring which may have a substituent. Examples of the ring include an aromatic ring, an alicyclic ring, and a heterocyclic ring. Examples of the substituent with respect to the ring include an alkyl group, a halogen atom, a hydroxy group, an alkoxy group, a carboxy group, a carboxylate group, a cyano group, a sulfo group, a sulfonate group, a nitro group, and an amino group. Examples of the alkyl group that is a substituent with respect to the ring include an alkyl group having 1, 2, 3, or 4 carbon atoms. From the viewpoint of easily improving the tensile strength, the compression set resistance, the abrasion resistance, and the scorch resistance of a vulcanizate, the terminal functional group A preferably has a benzothiazole ring formed by R^{a1} and R^{a2} bonding with each other. The benzothiazole ring may not have a substituent. In a case where the benzothiazole ring has a substituent, the substituent is preferably an alkyl group, and more preferably an alkyl group bonded in 4-position of the benzothiazole ring, from the viewpoint of easily improving the tensile strength, the compression set resistance, the abrasion resistance, and the scorch resistance of a vulcanizate. That is, the alkyl group is preferably bonded to the benzothiazole ring, and the alkyl group is more preferably bonded in 4-position of the benzothiazole ring.

The sulfur-modified chloroprene rubber may have the terminal functional group B, and may not have the terminal functional group B. The terminal functional group B may be positioned at the terminal of the main chain and/or the side chain. The terminal functional group B can be obtained, for example, by using a dithiocarbamic acid-based compound in a plasticization step described below.

Examples of the substituent with respect to the alkyl group for R^{b1} or R^{b2} include a halogen atom, a hydroxy group, an alkoxy group, a carboxy group, a carboxylate group, a cyano group, a sulfo group, a sulfonate group, a nitro group, and an amino group. Examples of the aryl group for R^{b1} or R^{b2} include a benzyl group, a phenyl group, a tolyl group, a xylyl group, and a naphthyl group. Examples of the substituent with respect to the aryl group for R^{b1} or R^{b2} include an alkyl group, a halogen atom, a hydroxy group, an alkoxy group, a carboxy group, a carboxylate group, a cyano group, a sulfo group, a sulfonate group, a nitro group, and an amino group. The alkyl group or the aryl group for R^{b1} or R^{b2} may not have a substituent.

The number of carbon atoms of at least one selected from R^{b1} and R^{b2} is preferably 3 or more, 3 to 10, 5 to 10, 6 to 10, 7 to 9, or 7 to 8, from the viewpoint of easily improving the tensile strength, the compression set resistance, the abrasion resistance, and the scorch resistance of a vulcanizate. The rubber composition of the present embodiment may not contain a sulfur-modified chloroprene rubber having a terminal functional group A and a terminal functional group B in which R^{b1} and R^{b2} are an ethyl group.

The content of the terminal functional group A is preferably in the following range on the basis of the total amount of the sulfur-modified chloroprene rubber (that is, the sulfur-modified chloroprene rubber preferably contains the following numerical value content (unit: parts by mass) of the terminal functional group A with respect to 100 parts by mass of the sulfur-modified chloroprene rubber). The content of the terminal functional group A is preferably 0.50% by mass or less, 0.45% by mass or less, 0.42% by mass or less, 0.40% by mass or less, 0.38% by mass or less, 0.35% by mass or less, 0.30% by mass or less, 0.25% by mass or less, 0.23% by mass or less, 0.20% by mass or less, 0.18% by mass or less, 0.16% by mass or less, 0.15% by mass or less, 0.14% by mass or less, 0.13% by mass or less, 0.12% by mass or less, 0.11% by mass or less, 0.10% by mass or less, 0.09% by mass or less, 0.08% by mass or less, 0.07% by mass or less, 0.06% by mass or less, 0.05% by mass or less, or 0.04% by mass or less, from the viewpoint of easily improving the mechanical strength, the compression set resistance, the abrasion resistance, and the scorch resistance of a vulcanizate. The content of the terminal functional group A is preferably 0.01% by mass or more, 0.03% by mass or more, 0.04% by mass or more, 0.05% by mass or more, 0.06% by mass or more, 0.08% by mass or more, 0.09% by mass or more, 0.10% by mass or more, 0.11% by mass or more, 0.12% by mass or more, 0.13% by mass or more, 0.14% by mass or more, 0.15% by mass or more, 0.16% by mass or more, 0.18% by mass or more, 0.20% by mass or more, 0.23% by mass or more, 0.25% by mass or more, 0.30% by mass or more, 0.35% by mass or more, 0.38% by mass or more, 0.40% by mass or more, or 0.42% by mass or more, from the viewpoint of easily improving the tensile strength, the compression set resistance, the abrasion resistance, and the scorch resistance of a vulcanizate. From these viewpoints, the content of the terminal functional group A is preferably 0.01 to 0.50% by mass, 0.05 to 0.40% by mass, or 0.10 to 0.35% by mass. The content of the terminal functional group A can be adjusted by the amount of the thiazole compound used in the plasticization step described below, the plasticization time and the plasticization temperature of the plasticization step.

The content of the terminal functional group B is not particularly limited, and is preferably in the following range on the basis of the total amount of the sulfur-modified chloroprene rubber (that is, the sulfur-modified chloroprene rubber preferably contains the following numerical value content (unit: parts by mass) of the terminal functional group B with respect to 100 parts by mass of the sulfur-modified chloroprene rubber). The content of the terminal functional group B is preferably 1.00% by mass or less, 0.90% by mass or less, 0.80% by mass or less, 0.70% by mass or less, 0.60% by mass or less, 0.50% by mass or less, 0.45% by mass or less, 0.40% by mass or less, 0.33% by mass or less, 0.32% by mass or less, 0.30% by mass or less, 0.29% by mass or less, 0.25% by mass or less, 0.23% by mass or less, 0.20% by mass or less, 0.19% by mass or less, 0.15% by mass or less, 0.14% by mass or less, 0.13% by mass or less, 0.12% by mass or less, 0.10% by mass or less, 0.09% by mass or less, 0.07% by mass or less, 0.06% by mass or less, 0.05% by mass or less, 0.03% by mass or less, or 0.01% by mass or less, from the viewpoint of easily improving the tensile strength, the compression set resistance, the abrasion resistance, and the scorch resistance of a vulcanizate. The content of the terminal functional group B may be 0% by mass and may be more than 0% by mass. In a case where the content of the terminal functional group B is more than 0% by mass, the content thereof is preferably 0.01% by mass or more, 0.03% by mass or more, 0.05% by mass or more, 0.06% by mass or more, 0.07% by mass or more, 0.09% by mass or more, 0.10% by mass or more, 0.12% by mass or more, 0.13% by mass or more, 0.14% by mass or more, 0.15% by mass or more, 0.19% by mass or more, 0.20% by mass or more, 0.23% by mass or more, 0.25% by mass or more, 0.29% by mass or more, 0.30% by mass or more, 0.32% by mass or more, 0.33% by mass or more, 0.40% by mass or more, 0.45% by mass or more, 0.50% by mass or more, 0.60% by mass or more, 0.70% by mass or more, or 0.80% by mass or more, from the viewpoint of easily improving the tensile strength, the compression set resistance, the abrasion resistance, and the scorch resistance of a vulcanizate. From these viewpoints, the content of the terminal functional group B is preferably 0 to 1.00% by mass, 0 to 0.80% by mass, or 0.10 to 0.60% by mass. The content of the terminal functional group B can be adjusted by the amount of the dithiocarbamic acid-based compound used in the plasticization step described below, the plasticization time and the plasticization temperature of the plasticization step.

The mass ratio B/A of the content of the terminal functional group B with respect to the content of the terminal functional group A is 12.00 or less (0 to 12.00). When the mass ratio B/A is more than 12.00, the compression set resistance of a vulcanizate is deteriorated.

The mass ratio B/A is preferably 11.60 or less, 11.00 or less, 10.00 or less, 9.00 or less, 8.00 or less, 7.00 or less, 6.00 or less, 5.00 or less, 4.00 or less, 3.00 or less, 2.50 or less, 2.00 or less, 1.00 or less, 0.64 or less, 0.61 or less, 0.60 or less, 0.50 or less, 0.45 or less, 0.44 or less, 0.40 or less, 0.30 or less, 0.20 or less, or 0.10 or less, from the viewpoint of easily improving the tensile strength, the compression set resistance, the abrasion resistance, and the scorch resistance of a vulcanizate. The mass ratio B/A may be 0 and may be more than 0. In a case where the mass ratio B/A is more than 0, the mass ratio B/A is preferably 0.10 or more, 0.20 or more, 0.30 or more, 0.40 or more, 0.50 or more, 0.60 or more, 0.61 or more, 0.64 or more, 1.00 or more, 2.00 or more, 2.50 or more, 3.00 or more, 4.00 or more, 5.00 or more, 6.00 or more, 7.00 or more, 8.00 or more, 9.00 or more, 10.00 or more, 11.00 or more, or 11.60 or more, from the viewpoint of easily improving the tensile strength, the compression set resistance, the abrasion resistance, and the scorch resistance of a vulcanizate. The mass ratio B/A is preferably more than 0 and 12.00 or less, 0.50 to 10.00, or 0.60 to 9.00.

The total amount of the terminal functional group A and the terminal functional group B (the total of the contents of the terminal functional group A and the terminal functional group B; the mass total (A + B)) is 0.10 to 1.00% by mass on the basis of the total amount of the sulfur-modified chloroprene rubber. When the mass total (A + B) is less than 0.10% by mass, the compression set resistance, the abrasion resistance, and the scorch resistance of a vulcanizate are deteriorated. When the mass total (A + B) is more than 1.00% by mass, a decrease in Mooney viscosity of a reaction product to be obtained by a method for producing a sulfur-modified chloroprene rubber described below is significant, which is not practical (a vulcanizate is not obtained).

The mass total (A + B) is preferably in the following range on the basis of the total amount of the sulfur-modified chloroprene rubber. The mass total (A + B) is preferably 0.15% by mass or more, 0.20% by mass or more, 0.24% by mass or more, 0.25% by mass or more, 0.30% by mass or more, 0.35% by mass or more, 0.37% by mass or more, 0.38% by mass or more, 0.40% by mass or more, 0.42% by mass or more, 0.45% by mass or more, 0.46% by mass or more, 0.48% by mass or more, 0.50% by mass or more, 0.51% by mass or more, 0.55% by mass or more, 0.57% by mass or more, 0.60% by mass or more, 0.65% by mass or more, 0.66% by mass or more, 0.70% by mass or more, 0.80% by mass or more, or 0.85% by mass or more, from the viewpoint of easily improving the tensile strength, the compression set resistance, the abrasion resistance, and the scorch resistance of a vulcanizate. The mass total (A + B) is preferably 0.90% by mass or less, 0.85% by mass or less, 0.80% by mass or less, 0.70% by mass or less, 0.66% by mass or less, 0.65% by mass or less, 0.60% by mass or less, 0.57% by mass or less, 0.55% by mass or less, 0.51% by mass or less, 0.50% by mass or less, 0.48% by mass or less, 0.46% by mass or less, 0.45% by mass or less, 0.42% by mass or less, 0.40% by mass or less, 0.38% by mass or less, 0.37% by mass or less, 0.35% by mass or less, 0.30% by mass or less, 0.25% by mass or less, or 0.24% by mass or less, from the viewpoint of easily improving the tensile strength, the compression set resistance, the abrasion resistance, and the scorch resistance of a vulcanizate. From these viewpoints, the mass total (A + B) is preferably 0.15 to 0.90% by mass, 0.20 to 0.80% by mass, or 0.30 to 0.70% by mass.

The contents of the terminal functional group A and the terminal functional group B in the sulfur-modified chloroprene rubber can be quantified by the procedure described in Examples.

The sulfur-modified chloroprene rubber may not have a functional group represented by General Formula (C) below, and may not have a functional group represented by General Formula (C) below and positioned at a molecular terminal. 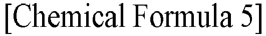 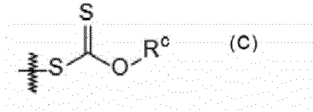 (In the formula, R^{c} represents a hydrogen atom or an alkyl group having 1 to 4 carbon atoms which may have a substituent.)

The content of the sulfur-modified chloroprene rubber in the rubber composition is preferably in the following range on the basis of the total amount of the rubber composition, from the viewpoint of easily improving the tensile strength, the compression set resistance, the abrasion resistance, and the scorch resistance of a vulcanizate. The content of the sulfur-modified chloroprene rubber is preferably 10% by mass or more, 20% by mass or more, 25% by mass or more, 30% by mass or more, 35% by mass or more, or 40% by mass or more. The content of the sulfur-modified chloroprene rubber is preferably 80% by mass or less, 70% by mass or less, 60% by mass or less, 55% by mass or less, 50% by mass or less, or 45% by mass or less. From these viewpoints, the content of the sulfur-modified chloroprene rubber is preferably 10 to 80% by mass, 20 to 70% by mass, or 30 to 50% by mass.

### (Method for producing sulfur-modified chloroprene rubber)

A method for producing a sulfur-modified chloroprene rubber has a polymerization step of subjecting chloroprene to emulsion polymerization in the presence of sulfur (Ss) to obtain a polymer, and a plasticization step (mixing step) of mixing the above-described polymer and a thiazole compound. An aspect of the method for producing a sulfur-modified chloroprene rubber has a polymerization step of subjecting at least chloroprene rubber and sulfur to emulsion polymerization to obtain a polymer solution and a plasticization step of plasticizing a polymer in the polymer solution by adding a thiazole compound into the polymer solution.

In the method for producing a sulfur-modified chloroprene rubber, for example, sulfur can be introduced in the polymer (for example, the main chain of the polymer), and a polysulfide bond (S₂ to S₈) can also be introduced. The sulfur-modified chloroprene rubber encompasses a latex obtained by using a thiazole compound to plasticize a sulfur-modified chloroprene polymer containing an introduced-sulfur, which is obtained, in the presence of sulfur, by subjecting a single substance of chloroprene to emulsion polymerization or by subjecting chloroprene and another monomer to emulsion polymerization, and a sulfur-modified chloroprene rubber obtained by drying and washing this latex by a general method.

Hereinafter, the detailed description will be given along the production step of the sulfur-modified chloroprene rubber.

### [Polymerization step]

In the method for producing a sulfur-modified chloroprene rubber, first, in the polymerization step, chloroprene is subjected to emulsion polymerization in the presence of sulfur to obtain a polymer. The polymer may be a polymer in a polymer solution. In the polymerization step, as necessary, chloroprene and the aforementioned monomer copolymerizable with chloroprene may be subjected to emulsion polymerization. The used amount of chloroprene or the used amount of the monomer copolymerizable with chloroprene is preferably the aforementioned used amount.

The used amount of sulfur (Ss) in the emulsion polymerization is preferably in the following range with respect to 100 parts by mass of monomers (the total of monomers to be polymerized). The used amount of sulfur is preferably 0.01 parts by mass or more and more preferably 0.1 parts by mass or more, from the viewpoint of easily obtaining sufficient mechanical properties or dynamic properties of a sulfur-modified chloroprene rubber. The used amount of sulfur is preferably 0.6 parts by mass or less and more preferably 0.5 parts by mass or less, from the viewpoint of easy processing by suppression of an excessive increase in adhesion of a sulfur-modified chloroprene rubber to a metal. From these viewpoints, the used amount of sulfur is preferably 0.01 to 0.6 parts by mass and more preferably 0.1 to 0.55 parts by mass.

As an emulsifier used in emulsion polymerization, one or two or more kinds of known emulsifiers, which can be used in emulsion polymerization of chloroprene, can be freely selected and used. Examples of the emulsifier include rosin acids, fatty acids, a metal salt of aromatic sulfonic acid formalin condensate, sodium dodecylbenzenesulfonate, potassium dodecylbenzenesulfonate, sodium alkyldiphenyl ether sulfonate, potassium alkyldiphenyl ether sulfonate, sodium polyoxyethylene alkyl ether sulfonate, sodium polyoxypropylene alkyl ether sulfonate, potassium polyoxyethylene alkyl ether sulfonate, and potassium polyoxypropylene alkyl ether sulfonate. From the viewpoint of easily improving the tensile strength, the compression set resistance, the abrasion resistance, and the scorch resistance of a vulcanizate, the emulsifier is preferably rosin acids. The "rosin acids" mean rosin acid, disproportionated rosin acid, alkali metal salts of disproportionated rosin acid (for example, disproportionated potassium rosinate). Examples of the constituent of disproportionated rosin acid include sesquiterpene, 8,5-isopimaric acid, dihydropimaric acid, secodehydroabietic acid, dihydroabietic acid, deisopropyldehydroabietic acid, and demethyldehydroabietic acid. Examples of the fatty acids include fatty acids (for example, saturated or unsaturated fatty acids having 6 to 22 carbon atoms) and metal salts of fatty acids (for example, sodium laurylsulfate).

From the viewpoint of easily improving the tensile strength, the compression set resistance, the abrasion resistance, and the scorch resistance of a vulcanizate, the emulsifier is preferably a metal salt of aromatic sulfonic acid formalin condensate and more preferably a sodium salt of β-naphthalene sulfonic acid formalin condensate. The sodium salt of β-naphthalene sulfonic acid formalin condensate is an emulsifier which is commonly used, stability is improved by adding a small amount thereof, and a latex can be stably produced without aggregation and precipitation in the production process. As another emulsifier which is suitably used, for example, an aqueous alkali soap solution composed of a mixture of alkali metal salts of disproportionated rosin acid and saturated or unsaturated fatty acids having 6 to 22 carbon atoms is mentioned.

The pH of the emulsion (for example, the aqueous emulsion) at the time of emulsion polymerization initiation is preferably 10.5 or more. Herein, the "emulsion" is a liquid mixture of chloroprene and other components (such as a monomer copolymerizable with chloroprene, an emulsifier, and sulfur (Ss)) immediately before emulsion polymerization initiation. The "emulsion" also encompasses a case where the composition sequentially varies by adding these other components (such as a monomer copolymerizable with chloroprene, and sulfur (Ss)) afterward, portionwise, etc. When the pH of the emulsion is 10.5 or more, polymer precipitation during polymerization is prevented so that the polymerization can be stably controlled. This effect can be particularly suitably obtained in the case of using rosin acids as an emulsifier. The pH of the emulsion can be adjusted by the amount of the alkali component such as sodium hydroxide or potassium hydroxide, which is present during emulsion polymerization.

The polymerization temperature of emulsion polymerization is preferably 0°C to 55°C and more preferably 30°C to 55°C, from the viewpoint of excellent polymerization regulation and productivity.

As a polymerization initiator, potassium persulfate, benzoyl peroxide, ammonium persulfate, or hydrogen peroxide which is usually used in radical polymerization, can be used. For example, the polymerization is performed in the following polymerization rate (conversion rate) range and then is terminated by adding a polymerization terminator (polymerization inhibitor).

The polymerization rate is preferably 60% or more and more preferably 70% or more, from the viewpoint of excellent productivity. The polymerization rate is preferably 95% or less and more preferably 90% or less, from the viewpoint of suppressing the development of the branched structure or gel formation affecting processability of a sulfur-modified chloroprene rubber. From these viewpoints, the polymerization rate is preferably 60 to 95% and more preferably 70 to 90%.

Examples of the polymerization terminator include diethylhydroxyamine, thiodiphenylamine, 4-tert-butylcatechol, and 2,2'-methylenebis-4-methyl-6-tert-butylphenol. The polymerization terminator may be used alone or in combination of two or more kinds thereof.

### [Plasticization step]

In the plasticization step, the polymer obtained in the polymerization step and a thiazole compound are mixed. In the plasticization step, by reacting the polymer obtained in the polymerization step and a thiazole compound with each other, the polymer can be plasticized, and for example, by adding a thiazole compound into the polymer solution obtained in the polymerization step, the polymer in the polymer solution can be plasticized. In the plasticization step, for example, sulfur (for example, a polysulfide bond (S₂ to Ss)) and a thiazole compound present in the polymer (for example, the main chain of the polymer) are reacted with each other, and thereby the polymer can be cut or depolymerized while the aforementioned terminal functional group A derived from a thiazole compound is formed. Hereinafter, chemicals used for cutting or depolymerization of the polymer are referred to as "plasticizer". A vulcanizate obtained by vulcanizing the sulfur-modified chloroprene rubber obtained by the plasticization step has favorable scorch resistance and balance of physical properties of the tensile strength, the compression set resistance, and the abrasion resistance of a vulcanizate is favorable.

As the thiazole compound (a compound having a thiazole ring), one or two or more kinds of known thiazole compounds can be freely selected and used. From the viewpoint of easily improving the tensile strength, the compression set resistance, the abrasion resistance, and the scorch resistance of a vulcanizate, the thiazole compound preferably includes at least one compound selected from N-cyclohexyl-2-benzothiazole sulfenamide, N-cyclohexyl-4-methyl-2-benzothiazole sulfenamide, N-cyclohexyl-4,5-dimethyl-2-benzothiazole sulfenamide, N,N-dicyclohexyl-1,3-benzothiazole-2-sulfenamide, N-(tert-butyl)-2-benzothiazole sulfenamide, N,N-diisopropyl-2-benzothiazole sulfenamide, 4,5-dihydrothiazol-2-sulfenamide, N-cyclohexyl-4,5-dihydrothiazol-2-sulfenamide, N-oxydiethyl benzothiazole-2-sulfenamide, 2-(4'-morpholinyldithio)benzothiazole, 2-mercaptobenzothiazole, 4,5-dihydro-2-mercaptothiazole, dibenzylthiazolyl disulfide, and 2-(morpholinodithio)benzothiazole. From the viewpoint of easily improving the tensile strength, the compression set resistance, the abrasion resistance, and the scorch resistance of a vulcanizate, the thiazole compound preferably includes a benzothiazole compound (a compound having a benzothiazole ring) and more preferably includes a benzothiazole compound having a benzothiazole ring to which a substituent (such as an alkyl group; for example, an alkyl group having 1, 2, 3, or 4 carbon atoms) is bonded. From the viewpoint of easily improving the tensile strength, the compression set resistance, the abrasion resistance, and the scorch resistance of a vulcanizate, the thiazole compound preferably includes a compound having a sulfenamide group, more preferably includes a benzothiazole compound having a sulfenamide group, and further preferably includes a benzothiazole compound having a sulfenamide group and a cyclohexane ring.

The used amount (addition amount) of the thiazole compound is preferably 0.2 to 3 parts by mass with respect to 100 parts by mass of the polymer (for example, the polymer in the polymer solution). When the used amount of the thiazole compound is 0.2 parts by mass or more, the tensile strength, the compression set resistance, the abrasion resistance, and the scorch resistance of a vulcanizate are easily improved. When the used amount of the thiazole compound is 3 parts by mass or less, a reaction product having an appropriate Mooney viscosity is easily obtained, and as a result, vulcanization moldability is easily improved. When the used amount of the thiazole compound is 0.2 to 3 parts by mass, the content of the terminal functional group A in the sulfur-modified chloroprene rubber is easily adjusted to 0.01 to 0.50% by mass (for example, 0.05 to 0.40% by mass; basis: the total amount of the sulfur-modified chloroprene rubber), and the content (residual amount) of the thiazole compound in the rubber composition is easily adjusted to 0.0001 to 0.0200 parts by mass (for example, 0.0005 to 0.0100 parts by mass; basis: 100 parts by mass of the sulfur-modified chloroprene rubber).

In the plasticization step, as a plasticizer, a thiazole compound and a dithiocarbamic acid-based compound can be used in combination. In the plasticization step, the polymer obtained in the polymerization step, the thiazole compound, and the dithiocarbamic acid-based compound can be mixed, and the polymer obtained in the polymerization step, the thiazole compound, and the dithiocarbamic acid-based compound can be reacted with one another. Thereby, the dithiocarbamic acid-based compound reacts with the thiazole compound to form a reactant having higher reactivity with sulfur (for example, a polysulfide bond) in the polymer rather than that in the case of using a single substance of a thiazole compound or a single substance of a dithiocarbamic acid-based compound, and thus the Mooney viscosity can be easily adjusted. The reactant reacts with sulfur in the polymer (for example, a polysulfide bond; for example, sulfur in the main chain of the polymer), and thereby the aforementioned terminal functional group A derived from the thiazole compound and the aforementioned terminal functional group B derived from the dithiocarbamic acid-based compound can be suitably formed.

Examples of the dithiocarbamic acid-based compound include dithiocarbamic acid, dithiocarbamate, monoalkyl dithiocarbamic acid, monoalkyl dithiocarbamate, monoaryl dithiocarbamic acid, monoaryl dithiocarbamate, dialkyl dithiocarbamic acid, dialkyl dithiocarbamate, diaryl dithiocarbamic acid, diaryl dithiocarbamate, tetraalkylthiuram disulfide, and tetraarylalkylthiuram disulfide. Examples of the salt include a sodium salt, a potassium salt, a calcium salt, a zinc salt, an ammonium salt, and a nickel salt.

As the dithiocarbamic acid-based compound, one or two or more kinds of known dithiocarbamic acid-based compounds can be freely selected and used. From the viewpoint of easily improving the tensile strength, the compression set resistance, the abrasion resistance, and the scorch resistance of a vulcanizate, the dithiocarbamic acid-based compound preferably includes at least one compound selected from tetraalkylthiuram disulfide and tetraarylalkylthiuram disulfide. From the viewpoint of easily improving the tensile strength, the compression set resistance, the abrasion resistance, and the scorch resistance of a vulcanizate, the dithiocarbamic acid-based compound preferably includes at least one compound selected from dithiocarbamic acid, sodium dithiocarbamate, potassium dithiocarbamate, calcium dithiocarbamate, zinc dithiocarbamate, ammonium dithiocarbamate, nickel dithiocarbamate, mono-2-ethylhexyl dithiocarbamate, sodium mono-2-ethylhexyl dithiocarbamate, potassium mono-2-ethylhexyl dithiocarbamate, calcium mono-2-ethylhexyl dithiocarbamate, zinc mono-2-ethylhexyl dithiocarbamate, ammonium mono-2-ethylhexyl carbamate, nickel mono-2-ethylhexyl carbamate, monobenzyl dithiocarbamate, sodium monobenzyl dithiocarbamate, potassium monobenzyl dithiocarbamate, calcium monobenzyl dithiocarbamate, zinc monobenzyl dithiocarbamate, ammonium monobenzyl dithiocarbamate, nickel monobenzyl dithiocarbamate, di-2-ethylhexyl dithiocarbamate, sodium di-2-ethylhexyl dithiocarbamate, potassium di-2-ethylhexyl dithiocarbamate, calcium di-2-ethylhexyl dithiocarbamate, zinc di-2-ethylhexyl dithiocarbamate, ammonium di-2-ethylhexyl carbamate, nickel di-2-ethylhexyl carbamate, dibenzyl dithiocarbamate, sodium dibenzyl dithiocarbamate, potassium dibenzyl dithiocarbamate, calcium dibenzyl dithiocarbamate, zinc dibenzyl dithiocarbamate, ammonium dibenzyl dithiocarbamate, nickel dibenzyl dithiocarbamate, tetrakis(2-ethylhexyl)thiuram disulfide, and tetrabenzylthiuram disulfide.

The used amount (addition amount) of the dithiocarbamic acid-based compound is not particularly limited, and is preferably 0 to 12 parts by mass, more preferably 0 to 8 parts by mass, further preferably more than 0 parts by mass and 8 parts by mass or less, and particularly preferably 0.5 to 4 parts by mass, with respect to 100 parts by mass of the polymer (for example, the polymer in the polymer solution). When the used amount of the dithiocarbamic acid-based compound is within these ranges, the Mooney viscosity of a reaction product is further easily controlled, the tensile strength, the abrasion resistance, and the scorch resistance of a vulcanizate are further improved, and the compression set is further reduced. When the used amount of the dithiocarbamic acid-based compound is 0 to 12 parts by mass (for example, 0 to 8 parts by mass), the content of the terminal functional group B in the sulfur-modified chloroprene rubber is easily adjusted to 1.00% by mass or less (for example, 0.80% by mass or less; basis: the total amount of the sulfur-modified chloroprene rubber) and the content (residual amount) of the dithiocarbamic acid-based compound in the rubber composition is easily adjusted to 2.50 parts by mass or less (for example, 2.00 parts by mass or less; basis: 100 parts by mass of the sulfur-modified chloroprene rubber).

The sulfur-modified chloroprene rubber may be obtained by performing cooling, pH adjusting, freezing, or drying of the polymer solution subjected to the plasticization step by a general method.

A reaction product obtained by the aforementioned method for producing a sulfur-modified chloroprene rubber contains a sulfur-modified chloroprene rubber and may contain an unreacted plasticizer (such as a thiazole compound or a dithiocarbamic acid-based compound). The Mooney viscosity (ML₁₊₄, 100°C) of the reaction product is not particularly limited, and is preferably in the following range. The Mooney viscosity is preferably 10 or more, 15 or more, 20 or more, 25 or more, or 30 or more, from the viewpoint of easily maintaining the processability of the rubber composition. The Mooney viscosity is preferably 80 or less, 75 or less, 70 or less, 65 or less, 60 or less, 55 or less, or 50 or less, from the viewpoint of easily maintaining the processability of the rubber composition. From these viewpoints, the Mooney viscosity is preferably 10 to 80 or 20 to 80. The Mooney viscosity can be adjusted by the addition amount of the plasticizer, the time and the plasticization temperature of the plasticization step.

### (Carbon black)

The rubber composition of the present embodiment contains carbon black. Thereby, the reinforcing effect of the carbon black can be obtained.

The average particle diameter of the carbon black is 70 nm or less from the viewpoint of obtaining a vulcanizate having excellent tensile strength and abrasion resistance by obtaining a sufficient reinforcing effect. The average particle diameter of the carbon black is preferably 60 nm or less, 50 nm or less, 45 nm or less, 43 nm or less, 40 nm or less, 38 nm or less, 35 nm or less, 30 nm or less, 28 nm or less, 27 nm or less, 25 nm or less, 20 nm or less, or 17 nm or less, from the viewpoint of easily improving the tensile strength and the abrasion resistance of a vulcanizate. The average particle diameter of the carbon black is preferably 10 nm or more, 15 nm or more, 17 nm or more, 20 nm or more, 25 nm or more, 27 nm or more, 28 nm or more, 30 nm or more, 35 nm or more, 38 nm or more, 40 nm or more, 43 nm or more, 45 nm or more, 50 nm or more, or 60 nm or more, from the viewpoint of easily improving the compression set resistance and the scorch resistance of a vulcanizate. From these viewpoints, the average particle diameter of the carbon black is preferably 10 to 70 nm, 15 to 60 nm, 20 to 50 nm, or 20 to 40 nm. The average particle diameter of the carbon black can be obtained by observation using an electron microscope according to JIS Z 8901.

The DBP absorption number of the carbon black is preferably 50 ml/100 g or more, 60 ml/100 g or more, or 70 ml/100 g or more, from the viewpoint of easily improving the tensile strength and the abrasion resistance of a vulcanizate. The DBP absorption number of the carbon black is preferably 75 ml/100 g or more, 80 ml/100 g or more, 85 ml/100 g or more, 90 ml/100 g or more, 95 ml/100 g or more, 100 ml/100 g or more, 110 ml/100 g or more, 120 ml/100 g or more, 127 ml/100 g or more, 128 ml/100 g or more, 130 ml/100 g or more, 140 ml/100 g or more, 150 ml/100 g or more, or 180 ml/100 g or more, from the viewpoint of easily improving the tensile strength, the compression set resistance, the abrasion resistance, and the scorch resistance of a vulcanizate. The DBP absorption number of the carbon black is preferably 180 ml/100 g or less, 150 ml/100 g or less, 140 ml/100 g or less, 130 ml/100 g or less, 128 ml/100 g or less, 127 ml/100 g or less, 120 ml/100 g or less, 110 ml/100 g or less, 100 ml/100 g or less, 95 ml/100 g or less, 90 ml/100 g or less, 85 ml/100 g or less, 80 ml/100 g or less, or 75 ml/100 g or less, from the viewpoint of easily improving the tensile strength, the compression set resistance, the abrasion resistance, and the scorch resistance of a vulcanizate. From these viewpoints, the DBP absorption number of the carbon black is preferably 80 to 150 ml/100 g, 100 to 140 ml/100 g, or 100 to 120 ml/100 g. The DBP absorption number (dibutyl phthalate absorption number) of the carbon black can be measured according to the oil absorption number method A specified in JIS K6217-4.

The iodine adsorption number of the carbon black is preferably 10 mg/g or more, 20 mg/g or more, 30 mg/g or more, 40 mg/g or more, 50 mg/g or more, 55 mg/g or more, 60 mg/g or more, 70 mg/g or more, 80 mg/g or more, 85 mg/g or more, 90 mg/g or more, 100 mg/g or more, 120 mg/g or more, 130 mg/g or more, or 150 mg/g or more, from the viewpoint of easily improving the tensile strength and the abrasion resistance of a vulcanizate. The iodine adsorption number of the carbon black is preferably 150 mg/g or less, 130 mg/g or less, 120 mg/g or less, 100 mg/g or less, 90 mg/g or less, 85 mg/g or less, 80 mg/g or less, 70 mg/g or less, 60 mg/g or less, 55 mg/g or less, 50 mg/g or less, 40 mg/g or less, 30 mg/g or less, or 20 mg/g or less, from the viewpoint of easily improving the compression set resistance and the scorch resistance of a vulcanizate. From these viewpoints, the iodine adsorption number of the carbon black is preferably 40 to 150 mg/g, 50 to 150 mg/g, 60 to 120 mg/g, or 70 to 100 mg/g. The iodine adsorption number of the carbon black can be measured according to JIS K6217-1.

The content of the carbon black is 25 to 55 parts by mass with respect to 100 parts by mass of the sulfur-modified chloroprene rubber. When the content of the carbon black is less than 25 parts by mass, the tensile strength and the abrasion resistance of a vulcanizate are not improved. When the content of the carbon black is more than 55 parts by mass, the scorch resistance of a vulcanizate is deteriorated, and the compression set resistance and the abrasion resistance of a vulcanizate are not improved. The content of the carbon black is preferably 28 parts by mass or more, 30 parts by mass or more, 32 parts by mass or more, or 35 parts by mass or more, from the viewpoint of easily improving the tensile strength and the abrasion resistance of a vulcanizate. The content of the carbon black is preferably 50 parts by mass or less, 45 parts by mass or less, 40 parts by mass or less, or 35 parts by mass or less, from the viewpoint of easily improving the compression set resistance, the abrasion resistance, and the scorch resistance of a vulcanizate. From these viewpoints, the content of the carbon black is preferably 25 to 50 parts by mass, 25 to 45 parts by mass, or 30 to 40 parts by mass.

The content of the carbon black in the rubber composition is preferably in the following range on the basis of the total amount of the rubber composition, from the viewpoint of easily improving the tensile strength, the compression set resistance, the abrasion resistance, and the scorch resistance of a vulcanizate. The content of the carbon black is preferably 1% by mass or more, 3% by mass or more, 5% by mass or more, 8% by mass or more, 10% by mass or more, 12% by mass or more, or 15% by mass or more. The content of the carbon black is preferably 35% by mass or less, 30% by mass or less, 25% by mass or less, 20% by mass or less, 18% by mass or less, or 16% by mass or less. From these viewpoints, the content of the carbon black is preferably 1 to 35% by mass, 5 to 30% by mass, or 10 to 20% by mass.

### (Diene-based rubber A)

The rubber composition of the present embodiment contains a diene-based rubber A different from a chloroprene rubber. Thereby, the reinforcing effect of the diene-based rubber can be obtained, and a vulcanizate having excellent abrasion resistance and scorch resistance is obtained.

As the diene-based rubber A, known diene-based rubbers can be used, and examples thereof include butadiene rubber (a homopolymer of butadiene, BR), styrene-butadiene rubber (SBR), nitrile rubber (NBR), natural rubber (NR), isoprene rubber (IR), ethylene-propylene-diene terpolymer rubber (EPDM), styrene-isoprene-styrene triblock copolymer (SIS), and styrene-butadiene-styrene triblock copolymer (SBS). The diene-based rubber A preferably includes at least one selected from butadiene rubber, styrene-butadiene rubber, and nitrile rubber, from the viewpoint of easily improving the abrasion resistance and the scorch resistance of a vulcanizate. The diene-based rubber A may not substantially include natural rubber.

The content of the diene-based rubber A is more than 0 parts by mass and 15 parts by mass or less with respect to 100 parts by mass of the sulfur-modified chloroprene rubber. When the content of the diene-based rubber A is 0 parts by mass, a sufficient effect of improving abrasion resistance and scorch resistance cannot be obtained. When the content of the diene-based rubber A is more than 15 parts by mass, a sufficient reinforcing effect cannot be obtained so that the tensile strength is not improved. The content of the diene-based rubber A is preferably 1 part by mass or more, 2 parts by mass or more, 3 parts by mass or more, 4 parts by mass or more, 5 parts by mass or more, 6 parts by mass or more, 7 parts by mass or more, or 8 parts by mass or more, from the viewpoint of easily improving the abrasion resistance and the scorch resistance of a vulcanizate. The content of the diene-based rubber A is preferably 14 parts by mass or less, 12 parts by mass or less, 10 parts by mass or less, 9 parts by mass or less, or 8 parts by mass or less, from the viewpoint of easily improving the tensile strength of a vulcanizate. From these viewpoints, the content of the diene-based rubber A is preferably 1 to 14 parts by mass, 4 to 12 parts by mass, or 5 to 10 parts by mass.

The content of the diene-based rubber A in the rubber composition is preferably in the following range on the basis of the total amount of the rubber composition, from the viewpoint of easily improving the tensile strength, the compression set resistance, the abrasion resistance, and the scorch resistance of a vulcanizate. The content of the diene-based rubber A is preferably more than 0% by mass, and is preferably 1% by mass or more, 1.5% by mass or more, 2% by mass or more, 2.5% by mass or more, 3% by mass or more, or 3.5% by mass or more. The content of the diene-based rubber A is preferably 10% by mass or less, 8% by mass or less, 6% by mass or less, 5% by mass or less, or 4% by mass or less. From these viewpoints, the content of the diene-based rubber A is preferably more than 0% by mass and 10% by mass or less, 1 to 8% by mass, or 2 to 5% by mass.

The total amount of the sulfur-modified chloroprene rubber and the diene-based rubber A in the rubber composition is preferably in the following range on the basis of the total amount of the rubber composition, from the viewpoint of easily improving the tensile strength, the compression set resistance, the abrasion resistance, and the scorch resistance of a vulcanizate. The total amount is preferably 10% by mass or more, 20% by mass or more, 25% by mass or more, 30% by mass or more, 35% by mass or more, 40% by mass or more, or 45% by mass or more. The total amount is preferably 90% by mass or less, 80% by mass or less, 70% by mass or less, 60% by mass or less, 55% by mass or less, or 50% by mass or less. From these viewpoints, the total amount is preferably 10 to 90% by mass, 20 to 70% by mass, or 30 to 50% by mass.

### (Other components)

The rubber composition of the present embodiment may contain a component other than the sulfur-modified chloroprene rubber, the carbon black, and the diene-based rubber A.

The rubber composition of the present embodiment may contain an unreacted plasticizer (such as a thiazole compound or a dithiocarbamic acid-based compound). As the plasticizer, the plasticizer mentioned above in the plasticization step can be used.

The content of the thiazole compound (the total amount of compounds corresponding to a thiazole compound; for example, the residual amount) in the rubber composition is preferably in the following range with respect to 100 parts by mass of the sulfur-modified chloroprene rubber. Furthermore, the content of a specific thiazole compound (for example, each thiazole compound exemplified as mentioned above; such as N-cyclohexyl-2-benzothiazole sulfenamide or N-cyclohexyl-4-methyl-2-benzothiazole sulfenamide) in the rubber composition is preferably in the following range with respect to 100 parts by mass of the sulfur-modified chloroprene rubber. The content of the thiazole compound (for example, the residual amount of an unreacted thiazole compound) can be adjusted by the amount of the thiazole compound used in the plasticization step, the plasticization time and the plasticization temperature of the plasticization step.

The content of the thiazole compound is preferably 0.0001 parts by mass or more, 0.0003 parts by mass or more, 0.0004 parts by mass or more, 0.0005 parts by mass or more, 0.0006 parts by mass or more, 0.0010 parts by mass or more, 0.0015 parts by mass or more, 0.0020 parts by mass or more, 0.0025 parts by mass or more, 0.0030 parts by mass or more, 0.0031 parts by mass or more, 0.0035 parts by mass or more, 0.0040 parts by mass or more, 0.0045 parts by mass or more, 0.0050 parts by mass or more, 0.0052 parts by mass or more, 0.0055 parts by mass or more, 0.0060 parts by mass or more, 0.0070 parts by mass or more, 0.0080 parts by mass or more, 0.0090 parts by mass or more, 0.0100 parts by mass or more, or 0.0110 parts by mass or more, from the viewpoint of easily improving the tensile strength, the compression set resistance, the abrasion resistance, and the scorch resistance of a vulcanizate. The content of the thiazole compound is preferably 0.0200 parts by mass or less, 0.0150 parts by mass or less, 0.0110 parts by mass or less, 0.0100 parts by mass or less, 0.0090 parts by mass or less, 0.0080 parts by mass or less, 0.0070 parts by mass or less, 0.0060 parts by mass or less, 0.0055 parts by mass or less, 0.0052 parts by mass or less, 0.0050 parts by mass or less, 0.0045 parts by mass or less, 0.0040 parts by mass or less, 0.0035 parts by mass or less, 0.0031 parts by mass or less, 0.0030 parts by mass or less, 0.0025 parts by mass or less, 0.0020 parts by mass or less, 0.0015 parts by mass or less, 0.0010 parts by mass or less, 0.0006 parts by mass or less, 0.0005 parts by mass or less, or 0.0004 parts by mass or less, from the viewpoint of easily improving the tensile strength, the compression set resistance, the abrasion resistance, and the scorch resistance of a vulcanizate. From these viewpoints, the content of the thiazole compound is preferably 0.0001 to 0.0200 parts by mass, 0.0005 to 0.0100 parts by mass, or 0.0010 to 0.0080 parts by mass.

The content of the dithiocarbamic acid-based compound (the total amount of compounds corresponding to a dithiocarbamic acid-based compound; for example, the residual amount) in the rubber composition is preferably in the following range with respect to 100 parts by mass of the sulfur-modified chloroprene rubber. Furthermore, the content of a specific dithiocarbamic acid-based compound (for example, each dithiocarbamic acid-based compound exemplified as mentioned above; such as tetrabenzylthiuram disulfide or tetrakis(2-ethylhexyl)thiuram disulfide) in the rubber composition is preferably in the following range with respect to 100 parts by mass of the sulfur-modified chloroprene rubber. The content of the dithiocarbamic acid-based compound (for example, the residual amount of an unreacted dithiocarbamic acid-based compound) can be adjusted by the amount of the dithiocarbamic acid-based compound used in the plasticization step, the plasticization time and the plasticization temperature of the plasticization step.

The content of the dithiocarbamic acid-based compound is preferably 2.50 parts by mass or less, 2.00 parts by mass or less, 1.80 parts by mass or less, 1.70 parts by mass or less, 1.50 parts by mass or less, 1.40 parts by mass or less, 1.37 parts by mass or less, 1.35 parts by mass or less, 1.30 parts by mass or less, 1.20 parts by mass or less, 1.10 parts by mass or less, 1.00 part by mass or less, 0.90 parts by mass or less, 0.80 parts by mass or less, 0.70 parts by mass or less, 0.60 parts by mass or less, 0.50 parts by mass or less, 0.45 parts by mass or less, or 0.42 parts by mass or less, from the viewpoint of easily improving the tensile strength, the compression set resistance, the abrasion resistance, and the scorch resistance of a vulcanizate. The content of the dithiocarbamic acid-based compound may be 0 parts by mass and may be more than 0 parts by mass. In a case where the content of the dithiocarbamic acid-based compound is more than 0 parts by mass, the content thereof is preferably 0.01 parts by mass or more, 0.05 parts by mass or more, 0.10 parts by mass or more, 0.20 parts by mass or more, 0.30 parts by mass or more, 0.40 parts by mass or more, 0.42 parts by mass or more, 0.45 parts by mass or more, 0.50 parts by mass or more, 0.60 parts by mass or more, 0.70 parts by mass or more, 0.80 parts by mass or more, 0.90 parts by mass or more, 1.00 part by mass or more, 1.10 parts by mass or more, 1.20 parts by mass or more, 1.30 parts by mass or more, 1.35 parts by mass or more, 1.37 parts by mass or more, 1.40 parts by mass or more, 1.50 parts by mass or more, 1.70 parts by mass or more, 1.80 parts by mass or more, or 2.00 parts by mass or more, from the viewpoint of easily improving the tensile strength, the compression set resistance, the abrasion resistance, and the scorch resistance of a vulcanizate. From these viewpoints, the content of the dithiocarbamic acid-based compound is preferably 0 to 2.50 parts by mass, 0 to 2.00 parts by mass, or 0.40 to 1.70 parts by mass.

In the rubber composition, the mass ratio D/C of the content (for example, residual amount) D of the dithiocarbamic acid-based compound with respect to the content (for example, residual amount) C of the thiazole compound is preferably in the following range. The mass ratio D/C is preferably 2500 or less, 2300 or less, 2000 or less, 1800 or less, 1600 or less, 1500 or less, 1200 or less, 1000 or less, 800 or less, 700 or less, 600 or less, 500 or less, 400 or less, 300 or less, 200 or less, 150 or less, 130 or less, 120 or less, 110 or less, 100 or less, 80 or less, 50 or less, 30 or less, or 10 or less, from the viewpoint that balance of physical properties of the tensile strength, the compression set resistance, the abrasion resistance, and the scorch resistance of a vulcanizate is further favorable. The mass ratio D/C is 0 or more and may be more than 0. In a case where the mass ratio D/C is more than 0, the mass ratio D/C is preferably 5 or more, 10 or more, 30 or more, 50 or more, 80 or more, 100 or more, 110 or more, 120 or more, 130 or more, 150 or more, 200 or more, 300 or more, 400 or more, 500 or more, 600 or more, 700 or more, 800 or more, 1000 or more, 1200 or more, 1500 or more, 1600 or more, 1800 or more, or 2000 or more, from the viewpoint that balance of physical properties of the tensile strength, the compression set resistance, the abrasion resistance, and the scorch resistance of a vulcanizate is further favorable. From these viewpoints, the mass ratio D/C is preferably 0 to 2500, 0 to 2000, or 100 to 1500.

The content of the thiazole compound and the content of the dithiocarbamic acid-based compound in the rubber composition can be quantified by the procedure described in Examples.

The rubber composition may contain an additive such as a vulcanizing agent, a processing aid, a stabilizer, a metal compound, a plasticizer (excluding the thiazole compound and the dithiocarbamic acid-based compound), or a filler (excluding the carbon black).

Examples of the vulcanizing agent include a metal oxide. Examples of the metal oxide include zinc oxide, magnesium oxide, lead oxide, trilead tetraoxide, iron trioxide, titanium dioxide, calcium oxide, and hydrotalcite. The vulcanizing agent may be used alone or in combination of two or more kinds thereof. The content of the vulcanizing agent is preferably 3 to 15 parts by mass with respect to 100 parts by mass of the sulfur-modified chloroprene rubber.

Examples of the processing aid include fatty acids such as stearic acid; paraffin-based processing aids such as polyethylene; and fatty acid amides. The processing aid may be used alone or in combination of two or more kinds thereof. The content of the processing aid is preferably 0.5 to 5 parts by mass with respect to 100 parts by mass of the sulfur-modified chloroprene rubber. The content of a saturated aliphatic carboxylic acid having a molecular weight of 300 or more in the rubber composition may be 5 parts by mass or less, less than 5 parts by mass, 1 part by mass or less, 0.1 parts by mass or less, 0.01 parts by mass or less, or 0.001 parts by mass or less with respect to 100 parts by mass of the rubber component, or may be substantially 0 parts by mass.

The rubber composition can contain a stabilizer (for example, a small amount of a stabilizer) for preventing a change in Mooney viscosity during storage. As a stabilizer, one or two or more kinds of known stabilizers, which can be used in the chloroprene rubber, can be freely selected and used. Examples of the stabilizer include phenyl-α-naphthylamine, octylated diphenylamine, 2,6-di-tert-butyl-4-phenylphenol, 2,2'-methylenebis(4-methyl-6-tert-butylphenol), and 4,4'-thiobis-(6-tert-butyl-3-methylphenol). As the stabilizer, from the viewpoint of easily improving the tensile strength, the compression set resistance, the abrasion resistance, and the scorch resistance of a vulcanizate, at least one selected from octylated diphenylamine and 4,4'-thiobis-(6-tert-butyl-3-methylphenol is preferred.

A metal compound is a compound which can be added for adjusting the vulcanization rate of the rubber composition or suppressing the degradation of the rubber composition by adsorbing chlorine sources such as hydrogen chloride generated by dehydrochlorination reaction of the rubber composition. As the metal compound, oxides or hydroxides of zinc, titanium, magnesium, lead, iron, beryllium, calcium, barium, germanium, zirconium, vanadium, molybdenum, or tungsten can be used. The metal compound may be used alone or in combination of two or more kinds thereof.

The content of the metal compound is not particularly limited, and is preferably in a range of 3 to 15 parts by mass with respect to 100 parts by mass of the sulfur-modified chloroprene rubber. When the content of the metal compound is adjusted to this range, the mechanical strength of a rubber composition can be improved.

A plasticizer is a component which can be added for lowering the hardness of the rubber composition and improving low-temperature properties thereof. Furthermore, when a sponge is produced using the rubber composition, the texture of this sponge can also be improved. Examples of the plasticizer include dioctyl phthalate, dioctyl adipate {also known as bis(2-ethylhexyl) adipate}, white oils, silicone oils, naphthene oils, aroma oils, triphenyl phosphate, and tricresyl phosphate. The plasticizer may be used alone or in combination of two or more kinds thereof.

The content of the plasticizer is not particularly limited, and is preferably in a range of 50 parts by mass or less with respect to 100 parts by mass of the sulfur-modified chloroprene rubber. When the content of the plasticizer is adjusted to this range, the tensile strength, the compression set resistance, the abrasion resistance, and the scorch resistance of a vulcanizate are easily improved while maintaining the tear strength of a rubber composition.

A filler is a component which can be added as a reinforcing agent for the sulfur-modified chloroprene rubber. Examples of the filler include silica, clay, talc, and calcium carbonate. The filler may be used alone or in combination of two or more kinds thereof.

In the rubber composition, the content of the block copolymer of styrene and butadiene, the content of the ethylene thiourea, or the content of the dipentamethylenethiuram tetrasulfide may be 0.1 parts by mass or less, less than 0.1 parts by mass, 0.01 parts by mass or less, or 0.001 parts by mass or less with respect to 100 parts by mass of the diene-based rubber (including the sulfur-modified chloroprene rubber, and the diene-based rubber A) or 100 parts by mass of the sum of the chloroprene rubber and the natural rubber, or may be substantially 0 parts by mass. The content of the amine salt of the dithiocarbamic acid in the rubber composition may be 1 part by mass or less, less than 1 part by mass, 0.1 parts by mass or less, 0.01 parts by mass or less, or 0.001 parts by mass or less with respect to 100 parts by mass of the sulfur-modified chloroprene rubber, or may be substantially 0 parts by mass.

### <Vulcanizate and molded article>

A vulcanizate of the present embodiment is a vulcanizate of the rubber composition of the present embodiment, and can be obtained by subjecting the sulfur-modified chloroprene rubber in the rubber composition of the present embodiment to a vulcanization treatment.

A molded article (molded body) of the present embodiment is a molded article (vulcanized molded body) composed of the vulcanizate of the present embodiment and can be obtained by molding the vulcanizate of the present embodiment. Examples of the molding method include press molding, injection molding, and extrusion molding. A molded article may be obtained by, after mixing the constituents (such as the sulfur-modified chloroprene rubber, the metal compound, the plasticizer, and the filler) of the rubber composition, molding in a desired shape and then performing a vulcanization treatment. The vulcanization treatment may be performed during molding or after molding. Furthermore, a molded article may be obtained by, after mixing the constituents of the rubber composition, performing a vulcanization treatment and then molding in a desired shape. The constituents of the rubber composition can be mixed using a roll, a banbury mixer, or an extruder.

Examples of the molded article include a transmission belt, a conveyor belt, a vibration-proof material (a vibration-proof rubber), an air spring (for example, an automobile air spring), a seal, a packing, a hose (a hose product), a sponge (a sponge product), and a rubber roll.

A conveyor belt is a machine component used in a winding transmission device and is a part which transmits a motive power from a driving wheel to a driven wheel. The conveyor belt is used frequently as being engaged with a pulley set to an axis. In order to efficiently transmit a motive power, since a belt stretched under a high tension undergoes repetitive rotational deformation, elastomer materials such as chloroprene rubber, natural rubber, styrene-butadiene rubber, nitrile rubber, and hydrogenated nitrile rubber are conventionally used. It is known that the chloroprene rubber frequently causes scorch at the molding stage, and it is an important technical subject to extend a scorch time. Furthermore, since a belt is continuously used in a dynamic environment, in order to improve product reliability, a belt material excellent in abrasion resistance, tensile strength, and compression set resistance is demanded.

In this regard, according to the present embodiment, since the tensile strength, the compression set resistance, the abrasion resistance, and the scorch resistance of a conveyor belt can be enhanced, a conveyor belt excellent in productivity and durability can be produced as compared to a conventional technique using a sulfur-modified chloroprene rubber.

### Examples

Hereinafter, the present invention will be more specifically described on the basis of Examples. Examples described below are only typical exemplary Examples of the present invention.

### <Preparation of evaluation sample>

### (Example 1)

### [Preparation of sulfur-modified chloroprene rubber]

To a polymerization tank having an inner volume of 30 L, 100 parts by mass of chloroprene, 0.55 parts by mass of sulfur, 120 parts by mass of pure water, 4.00 parts by mass of disproportionated potassium rosinate (manufactured by Harima Chemicals, Inc.), 0.60 parts by mass of sodium hydroxide, and 0.6 parts by mass of a sodium salt of β-naphthalene sulfonic acid formalin condensate (trade name "DEMOL N": manufactured by Kao Corporation) were added. The pH of the aqueous emulsifier before polymerization initiation was 12.8. 0.1 parts by mass of potassium persulfate was added as a polymerization initiator, and then emulsion polymerization was performed under a nitrogen flow at a polymerization temperature of 40°C. 0.05 parts by mass of diethylhydroxyamine as a polymerization terminator was added at the time point of a conversion rate of 85% to terminate the polymerization, thereby obtaining a chloroprene polymer solution.

To the aforementioned polymer solution, a plasticizer emulsion, which was composed of 5 parts by mass of chloroprene, 1 part by mass of N-cyclohexyl-2-benzothiazole sulfenamide (plasticizer, trade name "NOCCELER CZ": manufactured by OUCHI SHINKO CHEMICAL INDUSTRIAL CO., LTD.), 4 parts by mass of tetrabenzylthiuram disulfide (plasticizer, trade name "NOCCELER TBzTD": manufactured by OUCHI SHINKO CHEMICAL INDUSTRIAL CO., LTD.), 0.05 parts by mass of a sodium salt of β-naphthalene sulfonic acid formalin condensate (emulsifier), and 0.05 parts by mass of sodium laurylsulfate (emulsifier), was added, thereby obtaining a sulfur-modified chloroprene polymer latex before plasticization. In this operation, from the viewpoint that plasticization can be more stably performed, a plasticizer emulsion in an emulsified state was obtained by adding sodium laurylsulfate to a plasticizer solution, which was obtained by dissolving a plasticizer in chloroprene, and then this plasticizer emulsion was added to the polymer solution.

The aforementioned sulfur-modified chloroprene polymer latex was distilled under reduced pressure to remove unreacted monomers, and then was plasticized at a temperature of 50°C for 1 hour while being stirred, and thereby a crude rubber containing the sulfur-modified chloroprene rubber (latex after plasticization) was obtained. The "crude rubber" may contain an unreacted plasticizer.

### [Analysis of content of terminal functional group]

The crude rubber was cooled, and then the polymer was isolated by a common freeze-solidification method to obtain a sulfur-modified chloroprene rubber. On the basis of the total amount of the sulfur-modified chloroprene rubber, the content of the terminal functional group derived from N-cyclohexyl-2-benzothiazole sulfenamide represented by Formula (A1) below (thiazole terminal species A1) was 0.13% by mass, and the content of the terminal functional group derived from tetrabenzylthiuram disulfide represented by Formula (B1) below (dithiocarbamic acid terminal species B1) was 0.29% by mass.

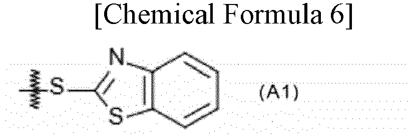

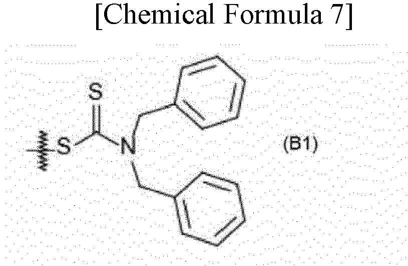

The content of the terminal functional group in the sulfur-modified chloroprene rubber was quantified by the following procedure. First, the sulfur-modified chloroprene rubber was purified with benzene and methanol and then freeze-dried again to obtain a sample for measurement. ¹H-NMR measurement was performed using this sample for measurement according to JIS K-6239. The measurement data thus obtained were corrected on the basis of the peak (7.24 ppm) of chloroform in deuterated chloroform used as a solvent. On the basis of the corrected measurement data, the area of peaks having peak tops at 7.72 to 7.83 ppm was calculated to quantify the content of the terminal functional group (thiazole terminal species), and the area of peaks having peak tops at 5.05 to 5.50 ppm was calculated to quantify the content of the terminal functional group (dithiocarbamic acid terminal species).

### [Measurement of residual amount of plasticizer]

The content (residual amount) of the plasticizer in the aforementioned crude rubber with respect to 100 parts by mass of the sulfur-modified chloroprene rubber was quantified by the following procedure. First, 1.5 g of the aforementioned crude rubber was dissolved in 30 ml of benzene, and then 60 ml of methanol was added dropwise thereto. Thereby, the rubber component (polymer component) was precipitated and separated from the solvent, and the liquid phase containing a non-rubber component as a solvent-soluble component was recovered. Dissolving with benzene and dropwise addition of methanol were performed again with respect to the precipitate by the same procedures, and thereby the rubber component was separated and the liquid phase containing a non-rubber component as a solvent-soluble component was recovered. The first and second liquid phases were mixed and then fixed to a constant volume of 200 ml to obtain a liquid as a sample for measurement. 20 µl of this sample for measurement was injected to a liquid chromatograph (LC, manufactured by Hitachi, Ltd., pump: L-6200, L-600, UV detector: L-4250). The mobile phase of the liquid chromatograph was used while changing the ratio of acetonitrile and water, and was flowed at a flow rate of 1 ml/min. As a column, Inertsil ODS-3 (φ4.6 × 150 mm, 5 µm, manufactured by GL Sciences Inc.) was used. The peak detection time was checked using 0.05 ppm, 0.1 ppm, and 1.0 ppm of standard solutions of the thiazole compound (measurement wavelength: 300 nm) and 10 ppm, 50 ppm, and 100 ppm of standard solutions of the dithiocarbamic acid-based compound (measurement wavelength: 280 nm), and a quantitative value was obtained by a standard curve obtained from the peak area thereof. By comparison between this quantitative value and the amount of the sample used in analysis, the contents of the unreacted thiazole compound and the unreacted dithiocarbamic acid-based compound in the crude rubber were obtained. Measurement results are presented in Table 1.

### [Measurement of Mooney viscosity]

Regarding the aforementioned crude rubber, the Mooney viscosity (ML₁₊₄) was measured according to JIS K 6300-1 under a type-L-rotor-preheating time of 1 minute, a rotation time of 4 minutes, and a test temperature of 100°C. Measurement results are presented in Table 1.

### [Preparation of rubber composition]

The aforementioned crude rubber (containing 100 parts by mass of a sulfur-modified chloroprene rubber), 35 parts by mass of carbon black (Carbon black A, trade name: Asahi #70, manufactured by Asahi Carbon Co., Ltd., average particle diameter: 28 nm, iodine adsorption number: 80 mg/g, DBP absorption number: 101 ml/100 g) presented in Table 1, 8 parts by mass of a diene-based rubber (butadiene rubber, trade name: BR01, manufactured by JSR Corporation), 1 part by mass of a processing aid (lubricant, trade name: STEARIC ACID 50S, manufactured by New Japan Chemical Co., Ltd.), 3 parts by mass of Antioxidant 1 (trade name: NOCRAC AD-F, manufactured by OUCHI SHINKO CHEMICAL INDUSTRIAL CO., LTD.), 1 part by mass of Antioxidant 2 (trade name: NOCRAC 810-NA, manufactured by OUCHI SHINKO CHEMICAL INDUSTRIAL CO., LTD.), 4 parts by mass of magnesium oxide (trade name: Kyowamag 30, manufactured by Kyowa Chemical Industry Co., Ltd.), 20 parts by mass of a filler (trade name: CROWNCLAY, manufactured by Shiraishi Calcium Kaisha, Ltd.), 20 parts by mass of Flame retardant 1 (trade name: HIGILITE H-42M, manufactured by Showa Denko K.K.), 22 parts by mass of Flame retardant 2 (trade name: EMPARA 70, manufactured by Ajinomoto Fine-Techno Co., Inc.), 8 parts by mass of Flame retardant 3 (trade name: EMPARA 40, manufactured by Ajinomoto Fine-Techno Co., Inc.), 5 parts by mass of a vulcanizing agent (trade name: Zinc oxide II, manufactured by SAKAI CHEMICAL INDUSTRY CO., LTD.), 1.2 parts by mass of Vulcanization accelerator 1 (trade name: ACCEL 22S, manufactured by Kawaguchi Chemical Industry Co., LTD.), and 0.5 parts by mass of Vulcanization accelerator 2 (trade name: NOCCELER DM, manufactured by OUCHI SHINKO CHEMICAL INDUSTRIAL CO., LTD.) were mixed using an 8-inch roll, thereby obtaining a rubber composition (sulfur-modified chloroprene rubber composition). The rubber composition was press-crosslinked at 160°C for 20 minutes to prepare an evaluation sample (vulcanizate).

### (Example 2)

An evaluation sample was obtained by the same method as in Example 1, except that, as a plasticizer, the addition amount of N-cyclohexyl-2-benzothiazole sulfenamide was changed from 1 part by mass to 0.5 parts by mass, and the addition amount of tetrabenzylthiuram disulfide was changed from 4 parts by mass to 8 parts by mass.

### (Example 3)

An evaluation sample was obtained by the same method as in Example 1, except that, as a plasticizer, the addition amount of N-cyclohexyl-2-benzothiazole sulfenamide was changed from 1 part by mass to 2 parts by mass, and the addition amount of tetrabenzylthiuram disulfide was changed from 4 parts by mass to 2 parts by mass.

### (Example 4)

An evaluation sample was obtained by the same method as in Example 1, except that, as a plasticizer, the addition amount of N-cyclohexyl-2-benzothiazole sulfenamide was changed from 1 part by mass to 3 parts by mass, and the addition amount of tetrabenzylthiuram disulfide was changed from 4 parts by mass to 2 parts by mass.

### (Example 5)

An evaluation sample was obtained by the same method as in Example 1, except that, as a plasticizer, the addition amount of N-cyclohexyl-2-benzothiazole sulfenamide was changed from 1 part by mass to 0.5 parts by mass, and the addition amount of tetrabenzylthiuram disulfide was changed from 4 parts by mass to 10 parts by mass.

### (Example 6)

An evaluation sample was obtained by the same method as in Example 1, except that, as a plasticizer, the addition amount of N-cyclohexyl-2-benzothiazole sulfenamide was changed from 1 part by mass to 0.5 parts by mass, and the addition amount of tetrabenzylthiuram disulfide was changed from 4 parts by mass to 2 parts by mass.

### (Example 7)

An evaluation sample was obtained by the same method as in Example 1, except that, as a plasticizer, the addition amount of N-cyclohexyl-2-benzothiazole sulfenamide was changed from 1 part by mass to 3 parts by mass, and tetrabenzylthiuram disulfide was not added.

### (Example 8)

An evaluation sample was obtained by the same method as in Example 1, except that, as a plasticizer, the addition amount of N-cyclohexyl-2-benzothiazole sulfenamide was changed from 1 part by mass to 0.3 parts by mass, and the addition amount of tetrabenzylthiuram disulfide was changed from 4 parts by mass to 8 parts by mass.

### (Example 9)

An evaluation sample was obtained by the same method as in Example 1, except that the addition amount of N-cyclohexyl-2-benzothiazole sulfenamide as a plasticizer was changed from 1 part by mass to 0.3 parts by mass, and the plasticization retention time was changed from 1 hour to 3 hours.

### (Example 10)

An evaluation sample was obtained by the same method as in Example 1, except that the addition amount of N-cyclohexyl-2-benzothiazole sulfenamide as a plasticizer was changed from 1 part by mass to 1.5 parts by mass, and the plasticization retention time was changed from 1 hour to 15 minutes.

### (Example 11)

An evaluation sample was obtained by the same method as in Example 1, except that the addition amount of tetrabenzylthiuram disulfide as a plasticizer was changed from 4 parts by mass to 8 parts by mass, and the plasticization retention time was changed from 1 hour to 15 minutes.

### (Example 12)

An evaluation sample was prepared by the same method as in Example 1, except that the butadiene rubber was changed to styrene-butadiene rubber (trade name: Nipol 1502, manufactured by Zeon Corporation).

### (Example 13)

An evaluation sample was prepared by the same method as in Example 1, except that the butadiene rubber was changed to nitrile rubber (trade name: Nipol 1041, manufactured by Zeon Corporation).

### (Example 14)

An evaluation sample was obtained by the same method as in Example 1, except that, as a plasticizer, N-cyclohexyl-2-benzothiazole sulfenamide was changed to N-cyclohexyl-4-methyl-2-benzothiazole sulfenamide (manufactured by Chemieliva pharma & Chem Co., LTD.). On the basis of the total amount of the sulfur-modified chloroprene rubber, the content of the terminal functional group derived from N-cyclohexyl-4-methyl-2-benzothiazole sulfenamide represented by Formula (A2) below (thiazole terminal species A2) was 0.15% by mass, and the content of the terminal functional group derived from tetrabenzylthiuram disulfide represented by Formula (B1) mentioned above (dithiocarbamic acid terminal species B1) was 0.33% by mass.

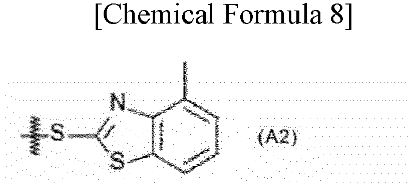

### (Example 15)

An evaluation sample was obtained by the same method as in Example 1, except that, as a plasticizer, tetrabenzylthiuram disulfide was changed to tetrakis(2-ethylhexyl)thiuram disulfide (trade name "NOCCELER TOT-N": manufactured by OUCHI SHINKO CHEMICAL INDUSTRIAL CO., LTD.). On the basis of the total amount of the sulfur-modified chloroprene rubber, the content of the terminal functional group derived from N-cyclohexyl-2-benzothiazole sulfenamide represented by Formula (A1) mentioned above (thiazole terminal species A1) was 0.16% by mass, and the content of the terminal functional group derived from tetrakis(2-ethylhexyl)thiuram disulfide represented by Formula (B2) below (dithiocarbamic acid terminal species B2) was 0.25% by mass.

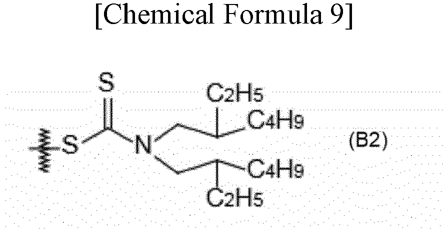

### (Example 16)

An evaluation sample was obtained by the same method as in Example 1, except that, as a plasticizer, N-cyclohexyl-2-benzothiazole sulfenamide was changed to N-cyclohexyl-4-methyl-2-benzothiazole sulfenamide, and tetrabenzylthiuram disulfide was changed to tetrakis(2-ethylhexyl)thiuram disulfide. On the basis of the total amount of the sulfur-modified chloroprene rubber, the content of the terminal functional group derived from N-cyclohexyl-4-methyl-2-benzothiazole sulfenamide represented by Formula (A2) mentioned above (thiazole terminal species A2) was 0.14% by mass, and the content of the terminal functional group derived from tetrakis(2-ethylhexyl)thiuram disulfide represented by Formula (B2) mentioned above (dithiocarbamic acid terminal species B2) was 0.32% by mass.

### (Example 17)

An evaluation sample was prepared by the same method as in Example 1, except that Carbon black A was changed to Carbon black B (trade name: Asahi #60U, manufactured by Asahi Carbon Co., Ltd., average particle diameter: 43 nm, iodine adsorption number: 40 mg/g, DBP absorption number: 110 ml/100 g).

### (Example 18)

An evaluation sample was prepared by the same method as in Example 1, except that Carbon black A was changed to Carbon black C (trade name: Asahi #95, manufactured by Asahi Carbon Co., Ltd., average particle diameter: 17 nm, iodine adsorption number: 150 mg/g, DBP absorption number: 127 ml/100 g).

### (Example 19)

An evaluation sample was prepared by the same method as in Example 1, except that Carbon black A was changed to Carbon black D (trade name: Asahi #52, manufactured by Asahi Carbon Co., Ltd., average particle diameter: 60 nm, iodine adsorption number: 19 mg/g, DBP absorption number: 128 ml/100 g).

### (Example 20)

An evaluation sample was prepared by the same method as in Example 1, except that Carbon black A was changed to Carbon black E (trade name: Asahi F-200GS, manufactured by Asahi Carbon Co., Ltd., average particle diameter: 38 nm, iodine adsorption number: 55 mg/g, DBP absorption number: 180 ml/100 g).

### (Example 21)

An evaluation sample was prepared by the same method as in Example 1, except that Carbon black A was changed to Carbon black F (trade name: Asahi #70L, manufactured by Asahi Carbon Co., Ltd., average particle diameter: 27 nm, iodine adsorption number: 85 mg/g, DBP absorption number: 75 ml/100 g).

### (Comparative Example 1)

A crude rubber was obtained by the same method as in Example 1, except that, as a plasticizer, the addition amount of N-cyclohexyl-2-benzothiazole sulfenamide was changed from 1 part by mass to 3 parts by mass, and the addition amount of tetrabenzylthiuram disulfide was changed from 4 parts by mass to 12 parts by mass. In Comparative Example 1, since the Mooney viscosity of the crude rubber was too low, an evaluation sample (vulcanizate) could not be prepared, and thus each evaluation was not performed.

### (Comparative Example 2)

An evaluation sample was obtained by the same method as in Example 1, except that, as a plasticizer, the addition amount of N-cyclohexyl-2-benzothiazole sulfenamide was changed from 1 part by mass to 0.3 parts by mass, and the addition amount of tetrabenzylthiuram disulfide was changed from 4 parts by mass to 0.5 parts by mass.

### (Comparative Example 3)

An evaluation sample was obtained by the same method as in Example 1, except that, as a plasticizer, the addition amount of N-cyclohexyl-2-benzothiazole sulfenamide was changed from 1 part by mass to 0.5 parts by mass, and the addition amount of tetrabenzylthiuram disulfide was changed from 4 parts by mass to 12 parts by mass.

### (Comparative Example 4)

An evaluation sample was obtained by the same method as in Example 1, except that, as a plasticizer, N-cyclohexyl-2-benzothiazole sulfenamide and tetrabenzylthiuram disulfide were changed to tetraethylthiuram disulfide, and the addition amount thereof was changed to 2.5 parts by mass. On the basis of the total amount of the sulfur-modified chloroprene rubber, the content of the terminal functional group derived from tetraethylthiuram disulfide represented by formula below was 0.26% by mass.

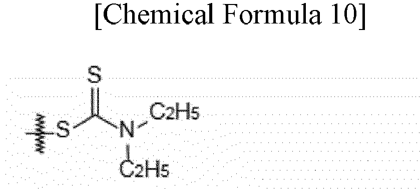

### (Comparative Example 5)

An evaluation sample was prepared by the same method as in Example 1, except that the addition amount of butadiene rubber was changed from 8 parts by mass to 16 parts by mass.

### (Comparative Example 6)

An evaluation sample was prepared by the same method as in Example 1, except that the butadiene rubber was not added.

### (Comparative Example 7)

An evaluation sample was prepared by the same method as in Example 1, except that the addition amount of Carbon black A was changed from 35 parts by mass to 20 parts by mass.

### (Comparative Example 8)

An evaluation sample was prepared by the same method as in Example 1, except that the addition amount of Carbon black A was changed from 35 parts by mass to 60 parts by mass.

### (Comparative Example 9)

An evaluation sample was prepared by the same method as in Example 1, except that Carbon black A was changed to Carbon black G (trade name: Asahi Thermal, manufactured by Asahi Carbon Co., Ltd., average particle diameter: 80 nm, iodine adsorption number: 24 mg/g, DBP absorption number: 28 ml/100 g).

### <Evaluation>

### (Scorch resistance: scorch time)

Regarding the aforementioned evaluation samples, a Mooney scorch test was performed according to JIS K 6300-1.

### (Tensile strength)

Test pieces (vulcanizates) were prepared using the aforementioned evaluation samples on the basis of JIS K 6250. A tensile test was performed on the basis of JIS K 6251, and the tensile strength (TB) of each test piece was measured.

### (Compression set)

Regarding the aforementioned evaluation samples, compression set (CS, compression set resistance) was measured according to JIS K 6262 under the test condition of 100°C for 72 hours.

### (Abrasion resistance)

Regarding the aforementioned evaluation samples, a DIN abrasion test (ΔV) was performed according to JIS K 6264-2.

### <Result>

Results of Examples are presented in the following Table 1 and Table 2, and results of Comparative Examples are presented in the following Table 3.

**[Table 1]**

| | | | Unit | Example | | | | | | | | | | |
|---|---|---|---|---|---|---|---|---|---|---|---|---|---|---|
| | | | | 1 | 2 | 3 | 4 | 5 | 6 | 7 | 8 | 9 | 10 | 11 |
| Content of terminal functional group in sulfur-modifie d chloroprene rubber | Terminal functional group A | Thiazole terminal species A1 | % by mass | 0.13 | 0.07 | 0.23 | 0.42 | 0.07 | 0.12 | 0.38 | 0.04 | 0.08 | 0.38 | 0.11 |
| | | Thiazole terminal species A2 | | - | - | - | - | - | - | - | - | - | - | - |
| | Terminal functional group B | Dithiocarbamic acid terminal species B1 | | 0.29 | 0.59 | 0.14 | 0.23 | 0.81 | 0.12 | 0 | 0.47 | 0.42 | 0.19 | 0.14 |
| | | Dithiocarbamic acid terminal species B2 | | - | - | - | - | - | - | - | - | - | - | - |
| | B/A | | - | 2.23 | 8.43 | 0.61 | 0.55 | 11.57 | 1.00 | 0 | 11.75 | 5.25 | 0.50 | 6.73 |
| | A+B | | %m; mass | 0.42 | 0.66 | 0.37 | 0.65 | 0.88 | 0.24 | 0.38 | 0.51 | 0.50 | 0.57 | 0.85 |
| Content of plasticizer with respect to 100 parts by mass of sulfur-modifie d chloroprene rubber in crude rubber | Thiazole compound (C) | N-Cyclohexyl-2-benzothiazole sulfenamide | parts by mass | 0.0052 | 0.0011 | 0.0048 | 0.0076 | 0.0025 | 0.0031 | 0.0085 | 0.0006 | 0.0004 | 0.0112 | 0.0068 |
| | | N-Cyclohexyl-4-methyl-2-benzothiazole sulfenamide | | - | - | - | - | - | - | - | - | - | - | - |
| | Dithiocarbamic acid-based compound (D) | Tetrabenzylthiuram disulfide | | 1.02 | 1.62 | 0.48 | 0.88 | 1.75 | 0.42 | 0 | 1.37 | 0.63 | 1.35 | 2.13 |
| | | Tetrakis(2-ethylhexyl)thiuram disulfide | | - | - | - | - | - | - | - | - | - | - | - |
| | D/C | | - | 196 | 1473 | 100 | 116 | 700 | 135 | 0 | 2283 | 1575 | 121 | 313 |
| Mooney viscosity (ML₁₊₄ at 100°C) of crude rubber | | | - | 51 | 44 | 48 | 18 | 22 | 84 | 43 | 55 | 59 | 24 | 24 |
| Composition | Sulfur-modified chloroprene robber | | parts by mass | 100 | 100 | 100 | 100 | 100 | 100 | 100 | 100 | 100 | 100 | 100 |
| | Carbon black | Carbon black A | | 35 | 35 | 35 | 35 | 35 | 35 | 35 | 35 | 35 | 35 | 35 |
| | Diene-based rubber | Butadiene rubber | | 8 | 8 | 8 | 8 | 8 | 8 | 8 | 8 | 8 | 8 | 8 |
| Evaluation | Scorch time | | min | 11.6 | 10.1 | 12.4 | 13.4 | 11.9 | 9.2 | 11.1 | 11.0 | 10.8 | 10.9 | 10.9 |
| | Tensile strength | | MPa | 18.3 | 18.6 | 17.9 | 17.2 | 17.8 | 18.5 | 17.1 | 17.8 | 18.0 | 17.0 | 17.6 |
| | Compression set | | % | 45 | 48 | 44 | 47 | 49 | 48 | 44 | 49 | 48 | 47 | 49 |
| | Abrasion resistance | | mm³ | 200 | 197 | 205 | 213 | 206 | 210 | 208 | 203 | 205 | 215 | 209 |

**[Table 2]**

| | | | Unit | Example | | | | | | | | | |
|---|---|---|---|---|---|---|---|---|---|---|---|---|---|
| | | | | 12 | 13 | 14 | 15 | 16 | 17 | 18 | 19 | 20 | 21 |
| Content of terminal functional group in sulfur-modified chloroprene rubber | Terminal functional group A | Thiazole terminal species A1 | % by mass | 0.13 | 0.13 | - | 0.16 | - | 0.13 | 0.13 | 0.13 | 0.13 | 0.13 |
| | | Thiazole terminal species A2 | | - | - | 0.15 | - | 0.14 | - | - | - | - | - |
| | Terminal functional | Dithiocarbamic acid terminal species B1 | | 0.29 | 0.29 | 0.33 | - | - | 0.29 | 0.29 | 0.29 | 0.29 | 029 |
| | group B | Dithiocarbamic acid terminal species B2 | | - | - | - | 0.25 | 0.32 | - | - | - | - | - |
| | B/A | | | 2.23 | 2.23 | 0.45 | 0.64 | 0.44 | 2.23 | 2.23 | 2.23 | 2.23 | 2.23 |
| | A+B | | % by mass | 0.42 | 0.42 | 0.48 | 0.41 | 0.46 | 0.42 | 0.42 | 0.42 | 0.42 | 0.42 |
| Content of plasticizer with respect to 100 parts by mass of sulfur-modified chloroprene rubber in crude rubber | Thiazole compound (C) | N-Cyclohexyl-2-benzothiazole sulfenamide | parts by mass | 0.0052 | 0.0052 | - | 0.0046 | - | 0.0045 | 0.0052 | 0.0052 | 0.0052 | 0.0052 |
| | | N-Cyclohexyl-4-methyl-2-benzothiazole sulfenamide | | - | - | 0.0044 | - | 0.0032 | - | - | - | - | - |
| | Dithiocarbamic acid-based compound (D) | Tetrabenzylthiuram disulfide | | 1.02 | 1.02 | 1.06 | - | - | 0.51 | 1.02 | 1.02 | 1.02 | 1.02 |
| | | Tetrakis(2-ethylhexyl)thiuram disulfide | | - | - | - | 0.88 | 1.12 | - | - | - | - | - |
| | D/C | | | 196 | 196 | 241 | 191 | 350 | 113 | 196 | 196 | 196 | 196 |
| Mooney viscosity (ML₁₊₄ at 100%) of crude rubber | | | - | 53 | 53 | 46 | 48 | 46 | 53 | 53 | 53 | 53 | 53 |
| Composition | Sulfur-modified chloroprene rubber | | parts by mass | 100 | 100 | 100 | 100 | 100 | 100 | 100 | 100 | 100 | 100 |
| | Carbon black | Carbon black A | | 35 | 35 | 35 | 35 | 35 | - | - | - | - | - |
| | | Carbon black B | | - | - | - | - | - | 35 | - | - | - | - |
| | | Carbon black C | | - | - | - | - | - | - | 35 | - | - | - |
| | | Carbon black D | | - | - | - | - | - | - | - | 35 | - | - |
| | | Carbon black E | | - | - | - | - | - | | - | - | 35 | - |
| | | Carbon black F | | - | - | - | - | - | - | - | - | - | 35 |
| | Diene-based rubber | Butadiene rubber | | - | - | 8 | 8 | 8 | 8 | 8 | 8 | 8 | 8 |
| | | Styrene-butadiene rubber | | 8 | - | - | - | - | - | - | - | - | - |
| | | Nitrile rubber | | - | 8 | - | - | - | - | - | - | - | - |
| Evaluation | Scorch time | | min | 12.1 | 10.7 | 11.7 | 11.2 | 11.5 | 12.3 | 9.2 | 12.9 | 10.6 | 10.5 |
| | Tensile strength | | MPa | 17.6 | 18.2 | 17.8 | 18.1 | 18.2 | 17.9 | 18.9 | 17.2 | 17.4 | 18.5 |
| | Compression set | | % | 47 | 46 | 45 | 45 | 45 | 45 | 48 | 46 | 45 | 45 |
| | Abrasion resistance | | mm³ | 194 | 198 | 202 | 198 | 198 | 207 | 194 | 212 | 199 | 209 |

**[Table 3]**

| | | | Unit | Compatative Example | | | | | | | | |
|---|---|---|---|---|---|---|---|---|---|---|---|---|
| | | | | 1 | 2 | 3 | 4 | 5 | 6 7 | | 8 | 9 |
| Content of terminal functional group in sulfur-modified chloroprene rubber | Terminal functional group A | Thiazole terminal species A1 | % by mass | 0.32 | 0.05 | 0.06 | - | 0.13 | 0.13 | 0.13 | 0.13 | 0.13 |
| | Terminal functional group B | Dithiocarbamic acid terminal species B1 | | 0.71 | 0.04 | 0.73 | - | 0.29 | 0.29 | 0.29 | 0.29 | 0.29 |
| | Terminal functional group derived from tetraethylthiuram disulfide | | | - | - | - | 0.26 | - | - | - | - | - |
| | B/A | | - | 2.22 | 0.80 | 12.17 | - | 2.23 | 2.23 | 2.23 | 2.23 | 2.23 |
| | A+B | | % by mass | 1.03 | 0.09 | 0.79 | - | 0.42 | 0.42 | 0.42 | 0.42 | 0.42 |
| Content of plasticizer with respect to 100 parts by mass of sulfur-modified chloroprene rubber in crude rubber | Thiazole compound (C) | N-Cyclohexyl-2-beazothiazole sulfenamide | parts by mass | 0.0074 | 0.0010 | 0.0014 | - | 0.0052 | 0.0052 | 0.0052 | 0.0052 | 0.0052 |
| | Dithiocarbamic acid-based compound (D) | Tetrabenzylthiuram disulfide | | 0.84 | 0.14 | 1.44 | - | 1.02 | 1.02 | 1.02 | 1.02 | 1.02 |
| | D/C | | - | 114 | 140 | 1029 | - | 196 | 196 | 196 | 196 | 196 |
| Mooney viscosity (ML₁₊₄ at 100°C) of crude rubber | | | - | × | 132 | 28 | 56 | 53 | 53 | 53 | 53 | 53 |
| Composition | Sulfur-modified chloroprene rubber | | parts by mass | 100 | 100 | 100 | 100 | 100 | 100 | 100 | 100 | 100 |
| | Carbon black | Carbon black A | | 35 | 35 | 35 | 35 | 35 | 35 | 20 | 60 | - |
| | | Carbon black G | | - | - | - | - | - | - | - | - | 35 |
| | Diene-based rubber Butadiene rubber | | | 8 | 8 | 8 | 8 | 16 | - | 8 | 8 | 8 |
| Evaluation | Scorch time | | mm | - | 6.3 | 10.1 | 8.1 | 12.1 | 8.1 | 15.6 | 7.1 | 13.6 |
| | Tensile strength | | MPa | - | 18.6 | 17.3 | 17.4 | 153 | 19.3 | 14.8 | 20.1 | 14.8 |
| | Compression set | | % | - | 56 | 51 | 50 | 48 | 44 | 47 | 50 | 44 |
| | Abrasion resistance | | mm³ | - | 223 | 208 | 216 | 189 | 217 | 229 | 221 | 231 |

As presented in Tables 1 to 3, it could be confirmed that the evaluation samples of Examples 1 to 21 are excellent in tensile strength, compression set resistance, abrasion resistance, and scorch resistance. Even in the case of using a thiazole compound, in Comparative Example 1 in which the total content (A + B) of the terminal functional groups in the sulfur-modified chloroprene rubber is more than 1.00% by mass, the Mooney viscosity was too low, and thus an evaluation sample (vulcanizate) could not been prepared.

## Claims

1. A rubber composition comprising: 100 parts by mass of a sulfur-modified chloroprene rubber; 25 to 55 parts by mass of carbon black having an average particle diameter of 70 nm or less; and more than 0 parts by mass and 15 parts by mass or less of a diene-based rubber other than a chloroprene rubber, wherein
the sulfur-modified chloroprene rubber comprises a functional group A represented by General Formula (A) below and positioned at a molecular terminal, and
in the sulfur-modified chloroprene rubber, a mass ratio B/A of a content of a functional group B represented by General Formula (B) below and positioned at a molecular terminal with respect to a content of the functional group A is 12.00 or less, and a total amount of the functional group A and the functional group B is 0.10 to 1.00% by mass. 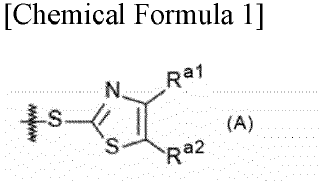 (In the formula, R^{a1} and R^{a2} each independently represent a hydrogen atom, a halogen atom, a hydroxy group, an alkoxy group, a carboxy group, a carboxylate group, a cyano group, an alkyl group which may have a substituent, or an arylthio group which may have a substituent, and R^{a1} and R^{a2} may bond with each other to form a ring which may have a substituent.) 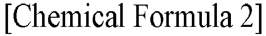 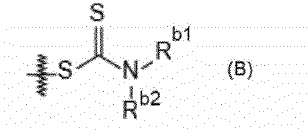 (In the formula, R^{b1} and R^{b2} each independently represent an alkyl group which may have a substituent or an aryl group which may have a substituent.)

2. The rubber composition according to claim 1, wherein the mass ratio B/A is more than 0 and 12.00 or less.

3. The rubber composition according to claim 2, wherein the number of carbon atoms of at least one selected from R^{b1} and R^{b2} is 3 or more.

4. The rubber composition according to claim 2, wherein the number of carbon atoms of at least one selected from R^{b1} and R^{b2} is 7 to 8.

5. The rubber composition according to any one of claims 1 to 4, wherein the functional group A comprises a benzothiazole ring formed by R^{a1} and R^{a2} bonding with each other.

6. The rubber composition according to any one of claims 1 to 5, wherein a content of the functional group A in the sulfur-modified chloroprene rubber is 0.05 to 0.40% by mass.

7. The rubber composition according to any one of claims 1 to 6, wherein a content of the functional group B in the sulfur-modified chloroprene rubber is 0.80% by mass or less.

8. The rubber composition according to any one of claims 1 to 7, wherein a content of a thiazole compound is 0.0005 to 0.0100 parts by mass with respect to 100 parts by mass of the sulfur-modified chloroprene rubber.

9. The rubber composition according to claim 8, wherein the thiazole compound comprises at least one compound selected from N-cyclohexyl-2-benzothiazole sulfenamide, N-cyclohexyl-4-methyl-2-benzothiazole sulfenamide, N-cyclohexyl-4,5-dimethyl-2-benzothiazole sulfenamide, N,N-dicyclohexyl-1,3-benzothiazole-2-sulfenamide, N-(tert-butyl)-2-benzothiazole sulfenamide, N,N-diisopropyl-2-benzothiazole sulfenamide, 4,5-dihydrothiazol-2-sulfenamide, N-cyclohexyl-4,5-dihydrothiazol-2-sulfenamide, N-oxydiethyl benzothiazole-2-sulfenamide, 2-(4'-morpholinyldithio)benzothiazole, 2-mercaptobenzothiazole, 4,5-dihydro-2-mercaptothiazole, dibenzylthiazolyl disulfide, and 2-(morpholinodithio)benzothiazole.

10. The rubber composition according to any one of claims 1 to 9, wherein a content of a dithiocarbamic acid-based compound is 2.00 parts by mass or less with respect to 100 parts by mass of the sulfur-modified chloroprene rubber.

11. The rubber composition according to claim 10, wherein the dithiocarbamic acid-based compound comprises at least one compound selected from dibenzyl dithiocarbamic acid, sodium dibenzyl dithiocarbamate, potassium dibenzyl dithiocarbamate, zinc dibenzyl dithiocarbamate, ammonium dibenzyl dithiocarbamate, nickel dibenzyl dithiocarbamate, sodium di-2-ethylhexyl dithiocarbamate, potassium di-2-ethylhexyl dithiocarbamate, calcium di-2-ethylhexyl dithiocarbamate, zinc di-2-ethylhexyl dithiocarbamate, ammonium di-2-ethylhexylcarbamate, tetrabenzylthiuram disulfide, and tetrakis(2-ethylhexyl)thiuram disulfide.

12. The rubber composition according to any one of claims 8 to 11, wherein a mass ratio D/C of a content D of a dithiocarbamic acid-based compound with respect to a content C of a thiazole compound is 2000 or less.

13. The rubber composition according to any one of claims 1 to 12, wherein a DBP absorption number of the carbon black is 80 to 150 ml/100 g, as measured according to the oil absorption number method A specified in JIS K6217-4.

14. The rubber composition according to any one of claims 1 to 13, wherein an iodine adsorption number of the carbon black is 40 to 150 mg/g, as measured according to JIS K6217-1.

15. The rubber composition according to any one of claims 1 to 14, wherein the diene-based rubber comprises at least one selected from butadiene rubber, styrene-butadiene rubber, and nitrile rubber.

16. A vulcanizate of the rubber composition according to any one of claims 1 to 15.

17. A molded article composed of the vulcanizate according to claim 16.

## Patentansprüche

1. Kautschukzusammensetzung, umfassend: 100 Masseteile eines schwefelmodifizierten Chloroprenkautschuks, 25 bis 55 Masseteile Ruß mit einem durchschnittlichen Partikeldurchmesser von 70 nm oder weniger und mehr als 0 Masseteile und 15 Masseteile oder weniger eines anderen dienbasierten Kautschuks als eines Chloroprenkautschuks, wobei
der schwefelmodifizierte Chloroprenkautschuk eine funktionelle Gruppe A umfasst, die durch die nachstehende allgemeine Formel (A) dargestellt ist und an einem Molekülende positioniert ist, und
in dem schwefelmodifizierten Chloroprenkautschuk ein Masseverhältnis B/A eines Gehalts einer funktionellen Gruppe B, die durch die nachstehende allgemeine Formel (B) dargestellt ist und an einem Molekülende positioniert ist, in Bezug auf einen Gehalt der funktionellen Gruppe A 12,00 oder weniger beträgt und eine Gesamtmenge der funktionellen Gruppe A und der funktionellen Gruppe B 0,10 bis 1,00 Masse-% beträgt. 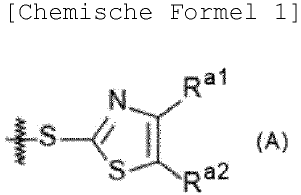 (In der Formel stellen R^{a1} und R^{a2} jeweils unabhängig ein Wasserstoffatom, ein Halogenatom, eine Hydroxygruppe, eine Alkoxygruppe, eine Carboxygruppe, eine Carboxylatgruppe, eine Cyanogruppe, eine Alkylgruppe, die einen Substituenten aufweisen kann, oder eine Arylthiogruppe, die einen Substituenten aufweisen kann, dar und R^{a1} und R^{a2} können miteinander verbunden sein, um einen Ring zu bilden, der einen Substituenten aufweisen kann.) 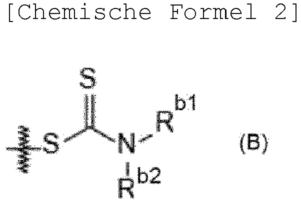 (In der Formel stellen R^{b1} und R^{b2} jeweils unabhängig eine Alkylgruppe, die einen Substituenten aufweisen kann, oder eine Arylgruppe, die einen Substituenten aufweisen kann, dar.)

2. Kautschukzusammensetzung gemäß Anspruch 1, wobei das Masseverhältnis B/A mehr als 0 und 12,00 oder weniger beträgt.

3. Kautschukzusammensetzung gemäß Anspruch 2, wobei die Anzahl an Kohlenstoffatomen von mindestens einem, ausgewählt aus R^{b1} und R^{b2}, 3 oder mehr beträgt.

4. Kautschukzusammensetzung gemäß Anspruch 2, wobei die Anzahl an Kohlenstoffatomen von mindestens einem, ausgewählt aus R^{b1} und R^{b2}, 7 bis 8 beträgt.

5. Kautschukzusammensetzung gemäß einem der Ansprüche 1 bis 4, wobei die funktionelle Gruppe A einen Benzothiazolring umfasst, der durch R^{a1} und R^{a2}, die miteinander verbunden sind, gebildet ist.

6. Kautschukzusammensetzung gemäß einem der Ansprüche 1 bis 5, wobei ein Gehalt der funktionellen Gruppe A in dem schwefelmodifizierten Chloroprenkautschuk 0,05 bis 0,40 Masse-% beträgt.

7. Kautschukzusammensetzung gemäß einem der Ansprüche 1 bis 6, wobei ein Gehalt der funktionellen Gruppe B in dem schwefelmodifizierten Chloroprenkautschuk 0,80 Masse-% oder weniger beträgt.

8. Kautschukzusammensetzung gemäß einem der Ansprüche 1 bis 7, wobei ein Gehalt einer Thiazolverbindung 0,0005 bis 0,0100 Masseteile in Bezug auf 100 Masseteile des schwefelmodifizierten Chloroprenkautschuks beträgt.

9. Kautschukzusammensetzung gemäß Anspruch 8, wobei die Thiazolverbindung mindestens eine Verbindung, ausgewählt aus N-Cyclohexyl-2-benzothiazolsulfenamid, N-Cyclohexyl-4-methyl-benzothiazolsulfenamid, N-Cyclohexyl-4,5-dimethyl-2-benzothiazolsulfenamid, N,N-Dicyclohexyl-1,3-benzothiazol-2-sulfenamid, N-(tert-Butyl)-2-benzothiazolsulfenamid, N,N-Diisopropyl-2-benzothiazolsulfenamid, 4,5-Dihydrothiazol-2-sulfenamid, N-Cyclohexyl-4,5-dihydrothiazol-2-sulfenamid, N-Oxydiethylbenzothiazol-2-sulfenamid, 2-(4'-Morpholinyldithio)benzothiazol, 2-Mercaptobenzothiazol, 4,5-Dihydro-2-mercaptohtiazol, Dibenzylthiazolyldisulfid und 2-(Morpholinodithio)benzothiazol, umfasst.

10. Kautschukzusammensetzung gemäß einem der Ansprüche 1 bis 9, wobei ein Gehalt einer Dithiocarbamidsäure-basierten Verbindung 2,00 Masseteile oder weniger in Bezug auf 100 Masseteile des schwefelmodifizierten Chloroprenkautschuks beträgt.

11. Kautschukzusammensetzung gemäß Anspruch 10, wobei die Dithiocarbamidsäure-basierte Verbindung mindestens eine Verbindung, ausgewählt aus Dibenzyldithiocarbamidsäure, Natriumdibenzyldithiocarbamat, Kaliumdibenzyldihtiocarbamat, Zinkdibenzyldithiocarbamat, Ammoniumdibenzyldithiocarbamat, Nickeldibenzyldithiocarbamat, Natrium-di-2-ethylhexyldithiocarbamat, Kalium-di-2-ethylhexyldithiocarbamat, Calcium-di-2-ethylhexyldithiocarbamat, Zink-di-2-ethylhexyldithiocarbamat, Ammonium-di-2-ethylhexylcarbamat, Tetrabenzylthiuramdisulfid und Tetrakis(2-ethylhexyl)thiuramdisulfid, umfasst.

12. Kautschukzusammensetzung gemäß einem der Ansprüche 8 bis 11, wobei ein Masseverhältnis D/C eines Gehalts D einer Dithiocarbamidsäure-basierten Verbindung in Bezug auf einen Gehalt C einer Thiazolverbindung 2.000 oder weniger beträgt.

13. Kautschukzusammensetzung gemäß einem der Ansprüche 1 bis 12, wobei eine DBP-Absorptionszahl des Rußes 80 bis 150 ml/100 g, gemessen gemäß dem in JIS K6217-4 spezifizierten Ölabsorptionszahlverfahren A, beträgt.

14. Kautschukzusammensetzung gemäß einem der Ansprüche 1 bis 13, wobei eine Iodadsorptionszahl des Rußes 40 bis 150 ml/100 g, gemessen gemäß JIS K6217-1, beträgt.

15. Kautschukzusammensetzung gemäß einem der Ansprüche 1 bis 14, wobei der dienbasierte Kautschuk mindestens einen, ausgewählt aus Butadienkautschuk, Styrol-ButadienKautschuk und Nitrilkautschuk, umfasst.

16. Vulkanisat der Kautschukzusammensetzung gemäß einem der Ansprüche 1 bis 15.

17. Formgegenstand, zusammengesetzt aus dem Vulkanisat gemäß Anspruch 16.

## Revendications

1. Composition de caoutchouc comprenant : 100 parties en masse d'un caoutchouc de chloroprène modifié par du soufre ; 25 à 55 parties en masse d'un noir de carbone ayant un diamètre de particule moyen de 70 nm ou moins ; et plus de 0 partie en masse et 15 parties en masse ou moins d'un caoutchouc à base de diène autre qu'un caoutchouc de chloroprène, dans laquelle
le caoutchouc de chloroprène modifié par du soufre comprend un groupe fonctionnel A représenté par la formule générale (A) ci-dessous et positionné à une extrémité moléculaire, et
dans le caoutchouc de chloroprène modifié par du soufre, un rapport massique B/A d'une teneur en groupe fonctionnel B représenté par la formule générale (B) ci-dessous et positionné à une extrémité moléculaire par rapport à une teneur en groupe fonctionnel A est de 12,00 ou moins, et une quantité totale du groupe fonctionnel A et du groupe fonctionnel B est de 0,10 à 1,00 % en masse. 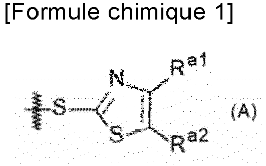 (Dans la formule, R^{a1} et R^{a2} représentent chacun indépendamment un atome d'hydrogène, un atome d'halogène, un groupe hydroxy, un groupe alcoxy, un groupe carboxy, un groupe carboxylate, un groupe cyano, un groupe alkyle qui peut avoir un substituant ou un groupe arylthio qui peut avoir un substituant, et R^{a1} et R^{a2} peuvent se lier l'un à l'autre pour former un cycle qui peut avoir un substituant.) 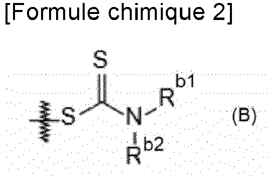 (Dans la formule, R^{b1} et R^{b2} représentent chacun indépendamment un groupe alkyle qui peut avoir un substituant ou un groupe aryle qui peut avoir un substituant.)

2. Composition de caoutchouc selon la revendication 1, dans laquelle le rapport massique B/A est supérieur à 0 et de 12,00 ou moins.

3. Composition de caoutchouc selon la revendication 2, dans laquelle le nombre d'atomes de carbone d'au moins un sélectionné parmi R^{b1} et R^{b2} est de 3 ou plus.

4. Composition de caoutchouc selon la revendication 2, dans laquelle le nombre d'atomes de carbone d'au moins un sélectionné parmi R^{b1} et R^{b2} est de 7 à 8.

5. Composition de caoutchouc selon l'une quelconque des revendications 1 à 4, dans laquelle le groupe fonctionnel A comprend un cycle benzothiazole formé par la liaison mutuelle de R^{a1} et R^{a2}.

6. Composition de caoutchouc selon l'une quelconque des revendications 1 à 5, dans laquelle une teneur en groupe fonctionnel A dans le caoutchouc chloroprène modifié par du soufre est de 0,05 à 0,40 % en masse.

7. Composition de caoutchouc selon l'une quelconque des revendications 1 à 6, dans laquelle une teneur en groupe fonctionnel B dans le caoutchouc chloroprène modifié par du soufre est de 0,80 % en masse ou moins.

8. Composition de caoutchouc selon l'une quelconque des revendications 1 à 7, dans laquelle une teneur en composé thiazole est de 0,0005 à 0,0100 partie en masse par rapport à 100 parties en masse du caoutchouc chloroprène modifié par du soufre.

9. Composition de caoutchouc selon la revendication 8, dans laquelle le composé thiazole comprend au moins un composé sélectionné parmi N-cyclohexyl-2-benzothiazole sulfénamide, N-cyclohexyl-4-méthyl-2-benzothiazole sulfénamide, N-cyclohexyl-4,5-diméthyl-2-benzothiazole sulfénamide, N,N-dicyclohexyl-1,3-benzothiazole-2-sulfénamide, N-(tert-butyl)-2-benzothiazole sulfénamide, N,N-diisopropyl-2-benzothiazole sulfénamide, 4,5-dihydrothiazol-2-sulfénamide, N-cyclohexyl-4,5-dihydrothiazol-2-sulfénamide, N-oxydiéthyl benzothiazole-2-sulfénamide, 2-(4'-morpholinyldithio)benzothiazole, 2-mercaptobenzothiazole, 4,5-dihydro-2-mercaptothiazole, disulfure de dibenzylthiazolyle et 2-(morpholinodithio)benzothiazole.

10. Composition de caoutchouc selon l'une quelconque des revendications 1 à 9, dans laquelle une teneur en composé à base d'acide dithiocarbamique est de 2,00 parties en masse ou moins par rapport à 100 parties en masse du caoutchouc chloroprène modifié par du soufre.

11. Composition de caoutchouc selon la revendication 10, dans laquelle le composé à base d'acide dithiocarbamique comprend au moins un composé sélectionné parmi l'acide dithiocarbamique de dibenzyle, le dithiocarbamate de dibenzyle de sodium, le dithiocarbamate de dibenzyle de potassium, le dithiocarbamate de dibenzyle de zinc, le dithiocarbamate de dibenzyle d'ammonium, le dithiocarbamate de dibenzyle de nickel, le dithiocarbamate de di-2-éthylhexyle de sodium, le dithiocarbamate de di-2-éthylhexyle de potassium, le dithiocarbamate de di-2-éthylhexyle de calcium, le dithiocarbamate de di-2-éthylhexyle de zinc, le di-2-éthylhexylcarbamate d'ammonium, le disulfure de tétrabenzylthiuram et le disulfure de tétrakis(2-éthylhexyl)thiuram.

12. Composition de caoutchouc selon l'une quelconque des revendications 8 à 11, dans laquelle un rapport massique D/C d'une teneur D en composé à base d'acide dithiocarbamique par rapport à une teneur C en composé thiazole est de 2000 ou moins.

13. Composition de caoutchouc selon l'une quelconque des revendications 1 à 12, dans laquelle un indice d'absorption de DBP du noir de carbone est de 80 à 150 ml/100 g, tel que mesuré selon la méthode A d'indice d'absorption d'huile spécifiée dans JIS K6217-4.

14. Composition de caoutchouc selon l'une quelconque des revendications 1 à 13, dans laquelle un indice d'adsorption d'iode du noir de carbone est de 40 à 150 mg/g, tel que mesuré selon JIS K6217-1.

15. Composition de caoutchouc selon l'une quelconque des revendications 1 à 14, dans laquelle le caoutchouc à base de diène comprend au moins un sélectionné parmi un caoutchouc butadiène, un caoutchouc styrène-butadiène et un caoutchouc nitrile.

16. Vulcanisat de la composition de caoutchouc selon l'une quelconque des revendications 1 à 15.

17. Article moulé composé du vulcanisat selon la revendication 16.
